# EUROPEAN PATENT SPECIFICATION

(11) **EP 4 179 838 B1**
(45) Date of publication and mention of the grant of the patent: **25.12.2024**
(21) Application number: 21737613.6
(22) Date of filing: 28.06.2021
(51) Int. Cl.: H04W 76/15, H04W 76/34

(54) **TECHNIQUE FOR ACTIVATING SECONDARY RADIO LINK CONTROL ENTITIES FOR PACKET DUPLICATION**
VERFAHREN ZUR AKTIVIERUNG VON SEKUNDÄRFUNKVERBINDUNGSSTEUERUNGSEINHEITEN ZUR PAKETDUPLIZIERUNG
TECHNIQUE D'ACTIVATION D'ENTITÉS DE CONTRÔLE DE LIAISON RADIO SECONDAIRES POUR UNE DUPLICATION DE PAQUETS

(30) Priority: 09.07.2020 US 202063049966 P
(43) Date of publication of application: 17.05.2023
(73) Proprietor: Telefonaktiebolaget LM Ericsson (publ), 164 83 Stockholm (SE)
(72) Inventor: SHI, Nianshan, 176 74 Järfälla (SE); DUDDA, Torsten, 41849 Wassenberg (DE); ZOU, Zhenhua, 171 42 Solna (SE)
(74) Representative: Ericsson
(86) International application number: PCT/EP2021/067715
(87) International publication number: WO 2022/008287

(56) References cited:
- CATT: "Duplication activation/deactivation MAC CE", vol. RAN WG2, no. Prague, Czech Republic; 20171009 - 20171013, 29 September 2017 (2017-09-29), XP051354853, Retrieved from the Internet <URL:http://www.3gpp.org/ftp/tsg_ran/WG2_RL2/TSGR2_99bis/Docs/> [retrieved on 20170929]
- ZTE: "Consideration on the activation/deactivation of data duplication for CA", vol. RAN WG2, no. Hangzhou, China; 20170515 - 20170519, 5 May 2017 (2017-05-05), XP051263847, Retrieved from the Internet <URL:http://www.3gpp.org/ftp/tsg_ran/WG2_RL2/TSGR2_98/Docs/> [retrieved on 20170505]
- OPPO: "Impact of duplication on RLC", vol. RAN WG2, no. Vancouver, Canada; 20180122 - 20180126, 12 January 2018 (2018-01-12), XP051385993, Retrieved from the Internet <URL:http://www.3gpp.org/ftp/tsg%5Fran/WG2%5FRL2/TSGR2%5FAHs/2018%5F01%5FNR/Docs/> [retrieved on 20180112]

## Description

### Technical Field

The present disclosure relates to selectively activating and deactivating secondary radio link control entities configured for packet duplication. More specifically, and without limitation, methods and devices are provided for transmitting, and for assisting in transmitting, a control element for selectively activating and deactivating secondary radio link control entities configured for packet duplication in a radio communication between a radio device and two nodes of a radio access network.

### Background

The Third Generation Partnership Project (3GPP) introduced carrier aggregation (CA) in 3GPP Release 10 as a method for a radio device (i.e., a user equipment, UE) to connect via multiple carriers to a single node (i.e., a base station) of a radio access network (RAN). A medium access control (MAC) entity in the MAC layer of the node functions as an aggregation point of the CA, allowing a centralized scheduler (also: scheduling entity) in the MAC layer to distribute packets and allocate radio resources, e.g. depending on a channel state (e.g., a channel estimate) among all carriers. This requires a tight integration of the radio protocols involved, e.g., between the MAC layer and a physical (PHY) layer. For CA, the MAC layer multiplexes data (e.g., packets) of a logical channel to the different radio resources of the aggregated carriers.

With dual-connectivity (DC), which expression shall encompass Multi-Connectivity (MC) herein, the aggregation point is at a packet data convergence protocol (PDCP) layer, meaning that PDCP packets are distributed among multiple radio link control (RLC) entities (and/or among multiple MAC entities). In this way, two MAC entities with their separate scheduling entities can be executed in two distinct nodes, without strict requirements on their interconnection while still allowing for realizing increased user throughput.

In 3GPP Release 15 for LTE and NR, both architecture concepts of CA and DC are used to improve radio transmission reliability. The improved reliability is achieved by means of packet duplication, which is performed by the PDCP layer in either cases of CA and DC. The PDCP duplicates an incoming data packet, e.g. a data packet of an ultra-reliable low-latency (URLLC) service. Each of the duplicates (i.e., the packets resulting from the duplication) undergoes procedures on protocol layers (e.g., RLC, MAC, and/or PHY) that are lower than the PDCP layer. Hence, the duplicates individually benefit from schemes for transmission reliability of these layers, e.g. retransmission reliability schemes. Eventually, the data packet will thus be transmitted via different frequency carriers to the radio device, which ensures uncorrelated transmission paths due to frequency diversity. Furthermore, the DC transmissions from or receptions at different sites provide spatial diversity.

A control element (CE) of the MAC layer defined in the 3GPP document TS 38.321, version 16.0.0, clause 6.1.3.32, allows to selectively activate and deactivate configured RLC entities, e.g., dynamically as a scheduling tool.

The 3GPP document R2-1710304 discusses an "Option 1" in which gNBs and UEs construct and interpret duplication activation/deactivation MAC CEs. The MAC CEs are used to manage duplicated DRBs, including both CA and DC DRBs that are configured for the UE. In this option, the network node that sends the MAC CE includes all bits corresponding to all duplicate DRBs for the UE, including CA duplicate DRBs of the other network node. The discussion acknowledges that it does not make sense for the Secondary Cell Group (SCG) to control the activation/deactivation of CA duplicated DRBs of the MCG (Master Cell Group), and vice versa. As a result, the UE should always disregard these bits and identify which bits are relevant based on the MAC entity transmitting the MAC CE.

However, in the case of packet duplication using two nodes, the radio device follows the received MAC CE, even if the RLC field in the MAC CE received from one of the two nodes belongs to the other one of the two nodes. For example, it is possible that a first node (e.g., a master cell group, MCG) indicates the activation or deactivation state of the secondary RLC entity of the second node (e.g., for the secondary cell group, SCG). Activating or deactivating the RLC entities associated with the SCG by means of the MAC CE transmitted from the MCG is problematic, since this may not be the intention of the radio resource management at the SCG.

### Summary

Accordingly, there is a need for a technique that allows to dynamically control a packet duplication using more than one node of a radio access network.

As to a first method aspect, a method of transmitting a control element (CE) for selectively activating and deactivating one or more secondary radio link control (RLC) entities configured for packet duplication in a radio communication between a radio device and a radio access network (RAN) is provided according to claim 1. The RAN comprises a first node and a second node. The first node comprises a primary RLC entity configured for the packet duplication and the second node comprises at least one of the one or more secondary RLC entities. A control message is exchanged between the first node and the second node, the control message being indicative of which one of the first node and the second node is to perform the step of transmitting the CE to the radio device. The method further comprises or initiates a step of transmitting the CE from the RAN to the radio device. The CE is indicative of an activity state of each of the one or more secondary RLC entities configured for the packet duplication.

In at least some embodiments, the activating or deactivating of the (e.g., secondary) RLC entities associated with the second node (e.g., a SCG) by means of the CE transmitted from the second node and not transmitted from the first node (e.g., an MCG) may enable a radio resource management at the second node (e.g., the SCG) to determine the activity states of its secondary RLC entities, e.g., without signaling coordination or with minimum signaling coordination between the first node and the second node. For example, transmitting the CE from the second node may result in consistent activity states for the secondary RLC entities.

Same or further embodiments may enable to dynamically control a packet duplication using more than one node of a radio access network. The technique may be implemented for 3GPP Release 16, in the absence of a timely coordination between the first node (e.g., a master node, MN) and the second node (e.g., a secondary node, SN) related to dynamic MAC CE. Herein, the coordination between the first node and the second node may mean that each node is aware of what MAC CE the other node indicates or transmits to the radio device.

Alternatively or in addition, an embodiment of the technique can provide a solution so that one node is appointed to be in control of MAC CE transmission to UE for RLC activation for PDCP duplication. Only the information about the activity state of RLC entities (also: RLC activation status) for the packet duplication from the node not in control needs to be reported to the controlling node.

Alternatively or in addition, an embodiment of the technique can provide a solution to control the CE when both the first node and the second node are allowed to transmit the CE.

Same or further embodiments of the technique also provide a solution that in some PDCP duplication configuration the CE can be transmitted (e.g., used for dynamic scheduling of the packet duplication) without coordination between the first node (e.g., the MN) and the second node (e.g., the SN), e.g., if it is clear which one of the first node and the second node controls the transmission of the CE.

The first method aspect may comprise, alternatively or in addition, any one of the features or steps referring to the first independent claim in the list.

As to a second method aspect, a method of assisting in transmitting a control element (CE) for selectively activating and deactivating one or more secondary radio link control (RLC) entities configured for packet duplication in a radio communication between a radio device and a radio access network (RAN) is provided. The RAN comprises a first node and a second node. The first node comprises a primary RLC entity configured for the packet duplication and the second node comprises at least one of the one or more secondary RLC entities. The method comprises or initiates sending assistance information to one of the first node and the second node, which transmits the CE to the radio device. The CE is indicative of an activity state of each of the one or more secondary RLC entities configured for the packet duplication depending on the assistance information.

The second method aspect may comprise, alternatively or in addition, any one of the features or steps referring to the second independent claim in the list.

In any aspect, the technique may be implemented for handling inter-node coordination for packet duplication, preferably for PDCP duplication.

The sending of the control message and/or the assistance information from one of the first and second nodes may be received by the other one of the first and second nodes. While the technique is described herein for one second node, the technique may be implemented for more than one second node. For example, each of the second nodes may comprise secondary RLC entities configured for the packet duplication.

The first method aspect may be performed at or by the second node and/or the controlling node.

The second method aspect may be performed at or by the first node and/or the non-controlling node.

Any one of the first and second nodes may be a base station of the RAN. Any one of the first and second nodes may form, or may be part of, the RAN, e.g., according to the Third Generation Partnership Project (3GPP) or according to the standard family IEEE 802.11 (Wi-Fi). The first and second method aspects may be performed by one or more embodiments of the nodes in the RAN. The RAN may comprise one or more base stations, e.g., acting as the first and second nodes.

The radio device may be a 3GPP user equipment (UE) or a Wi-Fi station (STA). The radio device may be a mobile or portable station, a device for machine-type communication (MTC), a device for narrowband Internet of Things (NB-loT) or a combination thereof. Examples for the UE and the mobile station include a mobile phone, a tablet computer and a self-driving vehicle. Examples for the portable station include a laptop computer and a television set. Examples for the MTC device or the NB-loT device include robots, sensors and/or actuators, e.g., in manufacturing, automotive communication and home automation. The MTC device or the NB-loT device may be implemented in a manufacturing plant, household appliances and consumer electronics.

Any of the radio devices may be wirelessly connected or connectable (e.g., according to a radio resource control, RRC, state or active mode) with any of the first and second nodes, e.g., with the first node using the primary RLC entity.

The base station may encompass any station that is configured to provide radio access to any of the radio devices. The base stations may also be referred to as transmission and reception point (TRP), radio access node or access point (AP). The base station or one of the radio devices functioning as a gateway (e.g., between the radio network and the RAN and/or the Internet) may provide a data link to a host computer providing the first and/or second data. Examples for the base stations may include a 3G base station or Node B, 4G base station or eNodeB, a 5G base station or gNodeB, a Wi-Fi AP and a network controller (e.g., according to Bluetooth, ZigBee or Z-Wave).

The RAN may be implemented according to the Global System for Mobile Communications (GSM), the Universal Mobile Telecommunications System (UMTS), 3GPP Long Term Evolution (LTE) and/or 3GPP New Radio (NR).

Any aspect of the technique may be implemented on a Physical Layer (PHY), a Medium Access Control (MAC) layer, a Radio Link Control (RLC) layer and/or a Radio Resource Control (RRC) layer of a protocol stack for the radio communication. Herein, the PDCP layer, the RLC layer, the MAC layer and the PHY layer are also briefly referred to by PDCP, RLC, MAC and PHY, respectively.

For example, the MAC layer may be implemented according to or based on the 3GPP document TS 38.321 (e.g., for Release 17). Alternatively or in addition, the RRC layer may be implemented according to or based on the 3GPP document TS 38.331 (e.g., for Release 17). Alternatively or in addition, the PHY layer may be implemented according to or based on the 3GPP document TS 38.311 (e.g., for Release 17) and/or the 3GPP document TS 38.213 (e.g., for Release 17).

Alternatively or in addition, the technique may be implemented in the first and/or second node as a Layer 2 module or MAC entity and/or a Layer 3 module or PDCP entity.

As to another aspect, a computer program product is provided. The computer program product comprises program code portions for performing any one of the steps of the method aspects disclosed herein when the computer program product is executed by one or more computing devices. The computer program product may be stored on a computer-readable recording medium. The computer program product may also be provided for download, e.g., via the radio network, the RAN, the Internet and/or the host computer. Alternatively, or in addition, the method may be encoded in a Field-Programmable Gate Array (FPGA) and/or an Application-Specific Integrated Circuit (ASIC), or the functionality may be provided for download by means of a hardware description language.

As to a further first device aspect, a controlling node (e.g., a base station) is provided. The controlling node is configured to perform the first method aspect.

As to a further second device aspect, a non-controlling node (e.g., a base station) is provided. The non-controlling node is configured to perform the second method aspect.

The UE comprises a radio interface and processing circuitry, which is configured to communicate with each of the first node and the second node.

The communication system may further include the UE. Alternatively, or in addition, the cellular network may further include one or more base stations configured for radio communication with the UE and/or to provide a data link between the UE and the host computer using the first and/or second method aspects.

The processing circuitry of the host computer may be configured to execute a host application, thereby providing the user data and/or any host computer functionality described herein. Alternatively, or in addition, the processing circuitry of the UE may be configured to execute a client application associated with the host application.

### Brief Description of the Drawings

Further details of embodiments of the technique are described with reference to the enclosed drawings, wherein:
- Fig. 1: shows a schematic block diagram of an embodiment of a device for transmitting a CE for selectively activating and deactivating one or more secondary RLC entities configured for packet duplication;
- Fig. 2: shows a schematic block diagram of an embodiment of a device for assisting in transmitting a CE for selectively activating and deactivating one or more secondary RLC entities configured for packet duplication;
- Fig. 3: shows a flowchart for an embodiment of a method of transmitting a CE for selectively activating and deactivating one or more secondary RLC entities configured for packet duplication, which method may be implementable by the device of Fig. 1;
- Fig. 4: shows a flowchart for an embodiment of a method of assisting in transmitting a CE for selectively activating and deactivating one or more secondary RLC entities configured for packet duplication, which method may be implementable by the device of Fig. 2;
- Fig. 5A: schematically illustrates an exemplary network environment comprising embodiments of the devices of Figs. 1 and 2;
- Fig. 5B: schematically illustrates an exemplary network environment comprising an embodiment of the device of Fig. 1 or 2;
- Fig. 6: schematically illustrates an exemplary network environment comprising embodiments of the devices of Figs. 1 and 2;
- Fig. 7: schematically illustrates a data structure of an embodiment of the CE;
- Fig. 8: schematically illustrates a first example of a signaling diagram resulting from embodiments of the devices of Figs. 1 and 2 in communication according to the methods of Figs. 3 and 4;
- Fig. 9: schematically illustrates a second example of a signaling diagram resulting from embodiments of the devices of Figs. 1 and 2 in communication according to the methods of Figs. 3 and 4;
- Fig. 10: schematically illustrates a data structure of an embodiment of a control message exchangeable between embodiments of the devices of Figs. 1 and 2;
- Fig. 11: shows a schematic block diagram of a controlling node embodying the device of Fig. 1;
- Fig. 12: shows a schematic block diagram of a non-controlling node embodying the device of Fig. 2;
- Fig. 13: schematically illustrates an example telecommunication network connected via an intermediate network to a host computer;
- Fig. 14: shows a generalized block diagram of a host computer communicating via a base station or radio device functioning as a gateway with a user equipment over a partially wireless connection; and
- Figs. 15 and 16: show flowcharts for methods implemented in a communication system including a host computer, a base station or radio device functioning as a gateway and a user equipment.

### Detailed Description

In the following description, for purposes of explanation and not limitation, specific details are set forth, such as a specific network environment in order to provide a thorough understanding of the technique disclosed herein. It will be apparent to one skilled in the art that the technique may be practiced in other embodiments that depart from these specific details. Moreover, while the following embodiments are primarily described for a 3GPP New Radio (NR) or 5G implementation, it is readily apparent that the technique described herein may also be implemented for any other radio communication technique, including a Wireless Local Area Network (WLAN) implementation according to the standard family IEEE 802.11, 3GPP LTE (e.g., LTE-Advanced or a related radio access technique such as MulteFire).

Moreover, those skilled in the art will appreciate that the functions, steps, units and modules explained herein may be implemented using software functioning in conjunction with a programmed microprocessor, an Application Specific Integrated Circuit (ASIC), a Field Programmable Gate Array (FPGA), a Digital Signal Processor (DSP) or a general purpose computer, e.g., including an Advanced RISC Machine (ARM). It will also be appreciated that, while the following embodiments are primarily described in context with methods and devices, the invention may also be embodied in a computer program product as well as in a system comprising at least one computer processor and memory coupled to the at least one processor, wherein the memory is encoded with one or more programs that may perform the functions and steps or implement the units and modules disclosed herein.

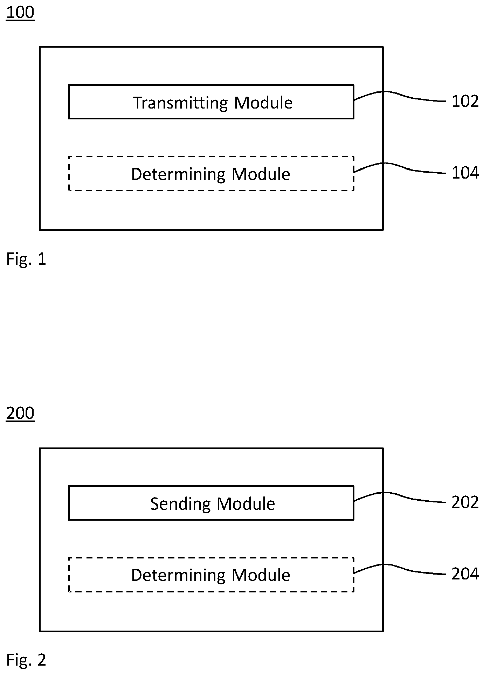

Fig. 1 schematically illustrates a block diagram of an embodiment of a device for transmitting a control element (CE) for selectively activating and deactivating one or more secondary radio link control (RLC) entities configured for packet duplication in a radio communication between a radio device and a radio access network (RAN). The device is generically referred to by reference sign 100.

The RAN comprises a first node and a second node, wherein the first node comprises a primary RLC entity configured for the packet duplication and the second node comprises at least one of the one or more secondary RLC entities.

The device 100 comprises a transmitting module 102 that transmits the CE from the RAN to the radio device, wherein the CE is indicative of an activity state of each of the one or more secondary RLC entities configured for the packet duplication.

Optionally, the device 100 comprises a determining module 104 that determines which of the one or more secondary RLC entities is to be activated or deactivated.

Any of the modules of the device 100 may be implemented by units configured to provide the corresponding functionality.

The device 100 may also be referred to as, or may be embodied by, a controlling node among the first node and the second node. The other one among the first node and the second node may be referred to as a non-controlling node. The controlling node 100 and the non-controlling node may be in communication, e.g., at least for exchanging the control message and/or the assistance information. The non-controlling node may be embodied by the device 200.

Fig. 2 schematically illustrates a block diagram of an embodiment of a device for assisting in transmitting a control element (CE) for selectively activating and deactivating one or more secondary radio link control (RLC) entities configured for packet duplication in a radio communication between a radio device and a radio access network (RAN). The device is generically referred to by reference sign 200.

The RAN comprises a first node and a second node, wherein the first node comprises a primary RLC entity configured for the packet duplication and the second node comprises at least one of the one or more secondary RLC entities.

The device 200 comprises a sending module 202 that sends assistance information to one of the first node and the second node, which transmits the CE to the radio device, wherein the CE is indicative of an activity state of each of the one or more secondary RLC entities configured for the packet duplication depending on the assistance information.

Optionally, the device 200 comprises a determining module 204 that determines a preference as to which of the one or more secondary RLC entities is to be activated or deactivated.

Any of the modules of the device 200 may be implemented by units configured to provide the corresponding functionality.

The device 200 may also be referred to as, or may be embodied by, a non-controlling node among the first node and the second node. The other one among the first node and the second node may be referred to as a controlling node. E.g., the one of the first node and the second node, which transmits the CE to the radio device, may be the controlling node. The non-controlling node 200 and the controlling node may be in communication, e.g., at least for exchanging the control message and/or the assistance information. The controlling node may be embodied by the device 100.

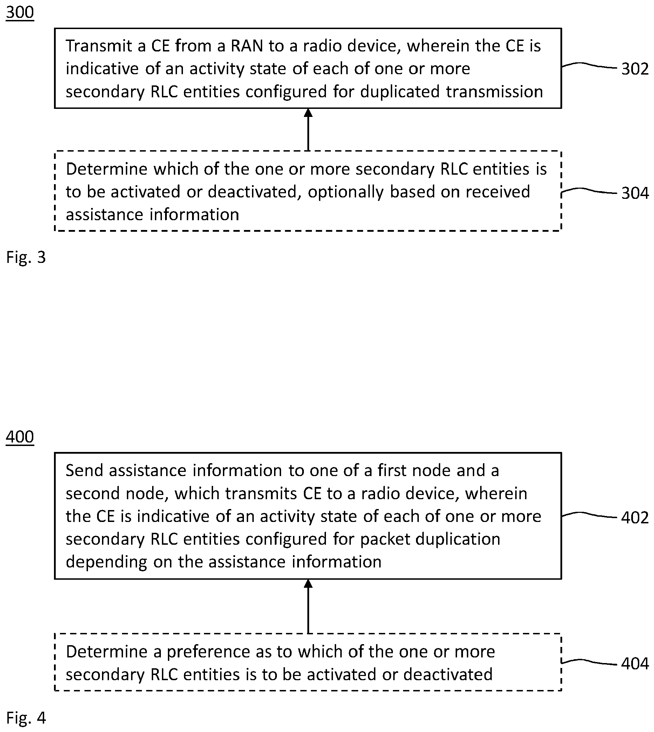

Fig. 3 shows an example flowchart for a method 300 of transmitting a control element (CE) for selectively activating and deactivating one or more secondary radio link control (RLC) entities configured for packet duplication in a radio communication between a radio device and a radio access network (RAN).

The RAN comprises a first node and a second node, wherein the first node comprises a primary RLC entity configured for the packet duplication and the second node comprises at least one of the one or more secondary RLC entities.

In a step 302 of the method 300, the CE is transmitted from the RAN to the radio device, wherein the CE is indicative of an activity state of each of the one or more secondary RLC entities configured for the packet duplication.

Optionally, a step 304 of the method 300 determines which of the one or more secondary RLC entities is to be activated or deactivated prior to the transmission 302.

The method 300 may be performed by the device 100. For example, the modules 102 and 104 may perform the steps 302 and 304, respectively.

Fig. 4 shows an example flowchart for a method 400 of assisting in transmitting a control element (CE) for selectively activating and deactivating one or more secondary radio link control (RLC) entities configured for packet duplication in a radio communication between a radio device and a radio access network (RAN).

The RAN comprises a first node and a second node, wherein the first node comprises a primary RLC entity configured for the packet duplication and the second node comprises at least one of the one or more secondary RLC entities.

In a step 402 of the method 400, assistance information is sent to one of the first node and the second node, which transmits the CE to the radio device, wherein the CE is indicative of an activity state of each of the one or more secondary RLC entities configured for the packet duplication depending on the assistance information.

Optionally, a step 404 of the method 400 determines a preference as to which of the one or more secondary RLC entities is to be activated or deactivated prior to the sending 402.

The method 400 may be performed by the device 200. For example, the modules 202 and 204 may perform the steps 402 and 404, respectively.

In any aspect, a control message may be exchanged between the first node and the second node, the control message being indicative of which one of the first node and the second node is to perform the step of transmitting the CE to the radio device, i.e., which one of the first node and the second node is the controlling node 100.

The technique may be applied to uplink (UL) and/or downlink (DL).

Each of the controlling node 100 and non-controlling node 200 may be a base station or radio node of the RAN.

Herein, any radio device (e.g., the radio device) may be a mobile or portable station and/or any radio device wirelessly connectable to a base station or RAN, or to another radio device. For example, the radio device may be a user equipment (UE), a device for machine-type communication (MTC) or a device for (e.g., narrowband) Internet of Things (IoT). Two or more radio devices may be configured to wirelessly connect to each other, e.g., in an *ad hoc* radio network or via a 3GPP SL connection. Furthermore, any base station may be a station providing radio access, may be part of a radio access network (RAN) and/or may be a node connected to the RAN for controlling the radio access. For example, the base station may be an access point, for example a Wi-Fi access point.

The CE 700 may be transmitted from one of the first node and the second node.

The CE 700 may be transmitted from only one of the first node and the second node. The node transmitting the CE may also be referred to as the controlling node or the one of the first node and the second node. The other node not transmitting the CE may also be referred to as the non-controlling node or the other one of the first node and the second node.

The method 300 may further comprise or initiate exchanging a control message 800 between the first node and the second node, the control message 800 being indicative of which one of the first node and the second node is to perform the step of transmitting 302 the CE 700 to the radio device.

The method 300 may be performed by the second node.

The CE 700 may be transmitted from the second node to the radio device.

The second node may comprise all of the secondary RLC entities.

The second node may determine the activity state of the secondary RLC entities without additional information from the first node.

The method 300 further comprises or initiate a step of sending a control message 800 from the second node to the first node or receiving a control message 800 from the first node at the second node. The control message 800 may trigger the second node to transmit 302 the CE 700 to the radio device.

The CE may be transmitted from the second node to the radio device in response to the control message.

Alternatively or in addition, the method 300 may further comprise or initiate a step of sending a control message 800 from the second node to the first node or receiving a control message 800 from the first node at the second node. The control message 800 may prevent the first node from transmitting the CE 700 to the radio device.

Each of the first node and the second node may comprise a central unit (CU) and a distributed unit (DU).

The DU of the first node may comprise the primary RLC entity. Alternatively or in addition, the DU of the second node may comprise the at least one of the one or more secondary RLC entities.

Each of the DUs may comprise a medium access control (MAC) layer that is configured for transmitting the CE.

The first node may comprise a packet data convergence protocol (PDCP) entity.

The PDCP entity may be an aggregation point of the packet duplication.

The packet duplication may be a PDCP duplication. The PDCP entity may perform the packet duplication. Alternatively or in addition, the PDCP entity may split the DRB between the first node and the second node.

The method may be performed by at least one of the CU of the second node and the DU of the second node.

The control message 800 may be sent from the CU of the second node to the CU of the first node or received from the CU of the first node at the CU of the second node.

The control message 800 may be forwarded from the CU of the second node to the DU of the second node.

The DU of the second node, optionally a medium access control (MAC) layer of the second node, may transmit 302 the CE 700 to the radio device in response to the control message 800.

A copy of the control message 800 may be sent from the CU of the first node to the DU of the first node.

The DU of the first node, optionally a MAC layer of the first node, may refrain from transmitting the CE 700 in response to the copy of the control message 800.

The control message 800 may be sent or received according to an application protocol and/or on an Xn interface between the first node and the second node.

The control message may comprise an Information Element (IE) for controlling (e.g., coordinating) the transmission of the CE. The control message may be implemented as a MAC CE control IE.

The control message 800 may be indicative of exclusive control for the node receiving the control message as to the determining 304 of the activity state of the secondary RLC entities and/or as to the transmitting 302 of the CE. Alternatively or in addition, the control message 800 may be indicative of no control for the node receiving the control message as to the determining 304 of the activity state of the secondary RLC entities and/or as to the transmitting 302 of the CE. Alternatively or in addition, the control message 800 may be indicative of direct control for the node receiving the control message as to the determining 304 of the activity state of the secondary RLC entities based on received assistance information and/or exclusive control as to the transmitting 302 of the CE. Alternatively or in addition, the control message 800 may be indicative of indirect control for the node receiving the control message as to the determining 304 of the activity state of the secondary RLC entities based on sent assistance information and/or no control as to the transmitting 302 of the CE.

The activity state indicated by the CE for each of the one or more secondary RLC entities may comprise either activating or deactivating the respective one of the one or more secondary RLC entities.

The CE may be a Duplication RLC Activation/Deactivation MAC CE, e.g., according to the 3GPP document TS 38.321, version 16.0.0, clause 6.1.3.32.

The method 300 may further comprise or initiate receiving assistance information from the first node at the second node. The determination may depend on the assistance information.

The radio communication between the radio device and the RAN may comprise a data radio bearer (DRB). The primary RLC entity and the one or more secondary RLC entities may be configured for the packet duplication of the DRB.

The radio communication may comprise a DRB. The method 300 may further comprise or initiate transmitting, to the radio device, an initial control message indicative of activating the packet duplication for the DRB.

The initial control message for activating the packet duplication may be a Duplication Activation/Deactivation MAC CE, e.g., according to the 3GPP document TS 38.321, version 16.0.0, clause 6.1.3.11. Alternatively or in addition, the initial control message may comprise radio resource control (RRC) signaling.

Each of the RLC entities may be associated with a different carrier and/or a different cell and/or a different logical channel and/or a different RLC path.

The RLC path may also be referred to as leg or route.

One of the first node and the second node may be a master node (MN) comprising a radio resource control (RRC) layer. The other one of the first node and the second node may be a secondary node (SN). The method 300 may comprise transmitting, to the radio device, or receiving, from the radio device, RRC signaling for at least one of establishment, configuration, maintenance, and release of a data radio bearer of the packet duplication.

The MN may provide radio access to the radio device in a master cell group (MCG). The SN may provide radio access to the radio device in a secondary cell group (SCG).

The first node may comprise a packet data convergence protocol (PDCP) entity. The PDCP entity may be an aggregation point of the packet duplication.

The PDCP entity may perform the packet duplication and/or the splitting of the DRB between the first node and the second node.

The first node may comprise a packet data convergence protocol (PDCP) entity. The method 300 may further comprise or initiate a step of determining a number of the secondary RLC entities configured for the packet duplication. Alternatively or in addition, the method 300 may further comprise or initiate a step of transmitting, to the second node, an initial control message indicative of activating the packet duplication and/or a number of the at least one secondary RLC entity at the second node and/or an initial state of the activity state for each of the at least one secondary RLC entity. Alternatively or in addition, the method 300 may further comprise or initiate a step of performing the packet duplication by the PDCP entity.

Herein, the expression "packet duplication", "duplicated transmission" and "dual connectivity" (DC) may encompass a "packet multiplication", a "multiplicated transmission" and a "multi-connectivity" (MC), respectively.

The radio communication may comprise at least one of a downlink from the RAN to the radio device and an uplink from the radio device to the RAN.

The packet duplication may be based on at least one of dual connectivity (DC) and carrier aggregation (CA).

One or two secondary RLC entities at the first node may be configured for the packet duplication using CA. One, two or three secondary RLC entities at the second node may be configured for the packet duplication using DC.

The CE may be a medium access control (MAC) CE.

The MAC CE may be indicative of the activity state of each of the RLC entities configured for the packet duplication other than the primary RLC entity.

The CE may be indicative of the activity state of each of 3 secondary RLC entities or up to 3 secondary RLC entities.

The CE may comprise a bit field that is sized to indicate the activity state of each of 3 secondary RLC entities or up to 3 secondary RLC entities. The CE may comprise an octet. A portion of the CE (e.g., 5 bits of the octet) may be indicative of an identifier of the DRB of the packet duplication.

The first node may further comprise at least one of the one or more secondary RLC entities. The method 300 may further comprise or initiate a step of exchanging a control message between the first node to the second node. The control message may be indicative of which one of the first node and the second node is to perform the step of transmitting 302 the CE to the radio device.

The first node may further comprise at least one of the one or more secondary RLC entities. The method 300 may further comprise or initiate a step of determining which one of the first node and the second node is to perform the step of transmitting 302 the CE to the radio device. The determination may be based on a condition.

The condition may require that the one of the first node and the second node, which comprises the PDCP entity for the packet duplication, performs the step of transmitting 302.

The condition may require that the one of the first node and the second node, which comprises more RLC entities configured for the packet duplication than the other one, performs the step of transmitting 302.

The packet duplication may be based on a split bearer. The condition may require that the first node comprising the primary RLC entity performs the step of transmitting 302.

The one of the first node and the second node, which performs the step of transmitting 302, may perform the step of determining 304 which of the one or more secondary RLC entities is to be activated or deactivated.

The method 300 may further comprise or initiate a step of receiving assistance information from the other one of the first node and the second node, which does not perform the step of transmitting 302, wherein the determination 304 may depend on the assistance information.

The assistance information may be indicative of a preference of the other node as to which of the one or more secondary RLC entities at the other node is to be activated or deactivated.

The assistance information may be indicative of the activity state, or a preference of the activity state, of at least one or each of the RLC entities configured for the packet duplication at the other one of the first node and the second node. Optionally the assistance information may be based on a link quality of the at least one or each of the RLC entities configured for the packet duplication at the other one of the first node and the second node.

The other one of the first node and the second node may indicate the activation or the preference of activating a secondary RLC entity at the other one of the first node and the second node, e.g., responsive to a reduction of the link quality of an active (e.g., primary or secondary) RLC entity at the other one of the first node and the second node. The one of the first node and the second node may activate the secondary RLC entity according to the preference indicated in the assistance information and/or may deactivate the active (e.g., primary or secondary) RLC entity in response to the reduction in the link quality.

The assistance information may be indicative of a link quality of at least one or each of the RLC entities configured for the packet duplication at the other one of the first node and the second node.

Herein, the link quality of any RLC entity may be the link quality of a radio link associated with said RLC entity.

The link quality may comprise at least one of: a channel state estimate; a channel quality indicator (CQI); a reference signal received power (RSRP) reported by the radio device; a reference signal received quality (RSRQ) reported by the radio device; a hybrid automatic repeat request (HARQ) failure rate; a rate of RLC retransmissions and/or retransmission failures; a latency and/or reliability measured for the data radio bearer or logical channel associated with the respective RLC entity; a load status; a number of connected radio devices; a number of used sub-bands used; and a QoS requirement associated with the packet duplication.

The one of the first node and the second node may perform the step of transmitting 302 responsive to determining a change in the activity state of at least one of the secondary RLC entities at the one of the first node and the second node.

The method 300 may be performed by the second node.

The method 400 may be performed by the first node.

The method 400 may further comprise any one of the steps of the method 300, or any step corresponding thereto.

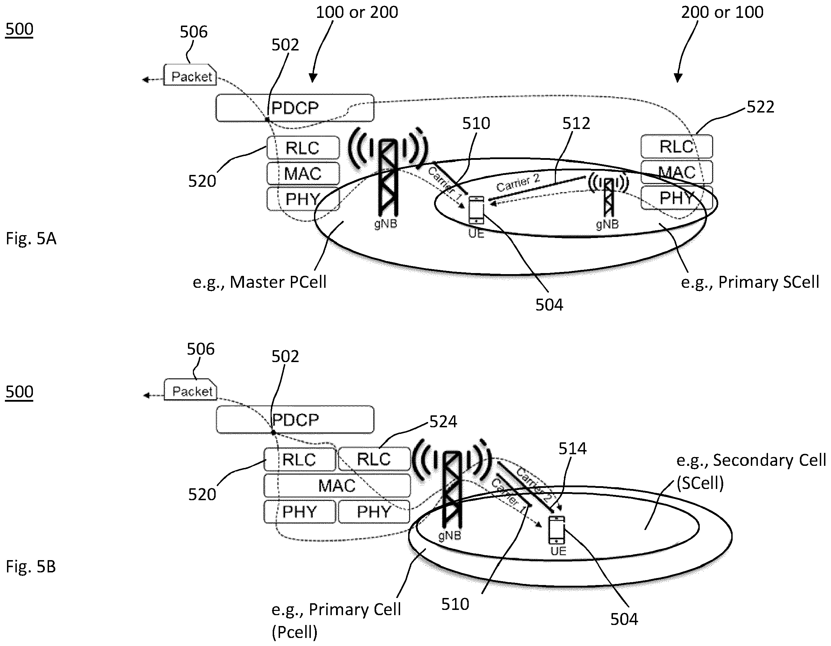

The Figs. 5A and 5B schematically illustrate DC and CA, respectively.

Fig. 5A schematically illustrates a first embodiment of a RAN 500 performing packet duplication 502 in an embodiment of the first node 100 or 200 of the RAN 500 (e.g., a master node of the RAN) providing multi-connectivity (MC), e.g., dual connectivity (DC), to a radio device 504 (e.g., a UE). A Master Cell Group (MCG) of the RAN (e.g., a group of serving cells associated with the master access node) and at least one Secondary Cell Group (SCG) of the RAN (e.g., a group of serving cells associated with a secondary access node) provide the MC to the radio device 504 though a primary leg 510 using a primary RLC entity 520 and a secondary leg 512 using a secondary RLC entity 522. The first embodiment of the RAN 500 may be applicable to LTE and/or NR (which is illustrated).

Fig. 5B schematically illustrates a second embodiment of a RAN 500 performing packet duplication 502 in an embodiment of the first node 100 or 200 of the RAN 500 providing carrier aggregation (CA) to a radio device 504 (e.g., a UE) though a primary leg 510 using a primary RLC entity 520 and a secondary leg 514 using a secondary RLC entity 524. The second embodiment of the RAN 500 may be combined with the first embodiment or may be extended by the first embodiment. The second embodiment of the RAN 500 may be applicable to LTE and/or NR (which is illustrated).

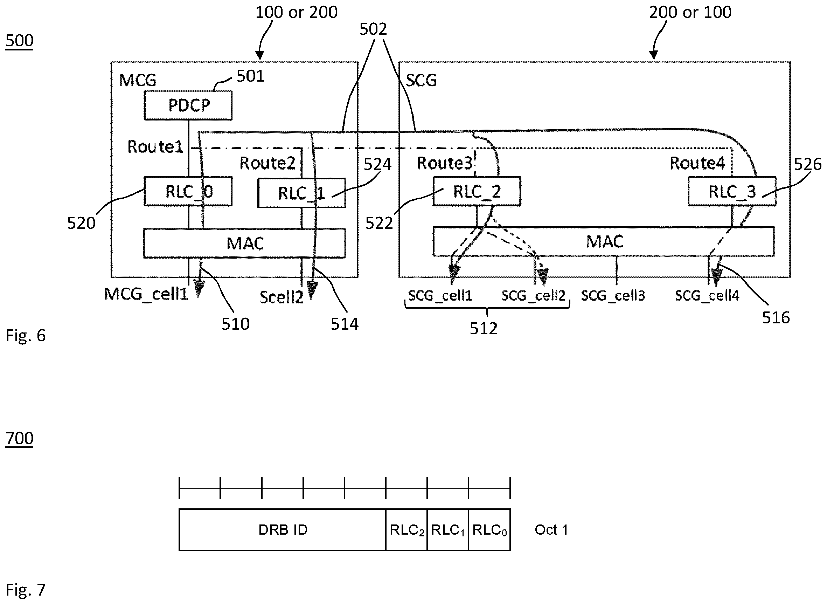

Fig. 6 schematically illustrates a third embodiment of the RAN 500. The third embodiment may be combined or interchanged with the first and/or second embodiment. Same reference signs may indicate equivalent or interchangeable features.

To support PDCP duplication 502 in CA, a secondary RLC entity 522 is configured for a radio bearer used in support of the packet duplication 502 realized in the context of a single radio technology (i.e. non-split radio bearer operation using either NR or LTE). See Fig. 6 wherein, for CA-based duplication, the same PDCP PDU 506 is sent using RLC_0 520 and RLC_1 524, wherein each PDCP PDU is required (through configuration restrictions) to be transmitted using a different carrier for the primary leg 510 and the secondary legs 512 to 516. To ensure the diversity gain, restrictions can be defined for the logical channels associated with these RLC entities 520, 522, 524 and 526, so that transmissions of each RLC entity are only allowed on a configured carrier (primary cell for 510 or secondary cells for 512 to 516).

Furthermore, the RAN 500 (e.g., a node 100 or 200 of the RAN 500 serving the radio device) may configure the PDCP duplication. An initial control message for activating (or deactivating) may be a medium access control (MAC) control element (CE), e.g., specified for controlling a configuration at the radio device to receive the PDCP duplication. The PDCP duplication may be controlled to allow using PDCP duplication as a "scheduling tool", i.e. allowing to selectively activate and deactivate the PDCP duplication, e.g., dynamically by the scheduler. Herein, "dynamically" may refer to a configuration that is controlled by the scheduler and/or controlled by means of the MAC CE. The PDCP duplication may be controlled to activate PDCP duplication only when necessary.

The initial control message for activating the packet duplication for a data radio bearer (DRB) may be a MAC CE according to 3GPP Release 15 and/or the 3GPP document TS 38.321, version 16.0.0, e.g. clause 6.1.3.11.

Alternatively or in addition, the initial control message for activating the packet duplication may be a MAC CE for selectively activating and deactivating the PDCP duplication. The MAC CE may have a fixed size and/or may comprise a single octet containing eight D-fields (e.g., eight bits), e.g., one field for one data radio bearer (DRB). Each D-field indicates the activity status (briefly: status) of the PDCP duplication of (e.g., dedicated) Data Radio Bearer (DRB) i being either activation or deactivation, optionally wherein i is the ascending order of the DRB ID among the DRBs configured with PDCP duplication and with at least one RLC entity associated with this MAC entity. In other words, the MAC CE indicates only the RLC entity within the MAC entity in which the MAC CE is received.

In 3GPP Release 16, PDCP duplication is enhanced to support more than two radio links, e.g. up to four radio links. PDCP duplication for MC (also referred to as MC-based duplication, e.g., for DC) and PDCP duplication for CA (also referred to as CA-based duplication) may be used together, e.g., as illustrated in Fig. 6. Alternatively or in addition, the CA-based duplication may use more than two carriers, e.g., as illustrated by the doted branch in the MAC below RLC_2.

Fig. 6 schematically illustrates a third embodiment of the RAN 500 for PDCP duplication in 3GPP Release 16 with up to 4 copies (e.g., RLC entities).

In the third embodiment, e.g., as depicted in Fig. 6, four radio links (i.e., four RLC entities 520 to 526) are configured in a way that MC-based duplication (i.e., the MCG and the at least one SCG) is configured and combined with CA-based duplication in each of the MCG (i.e., route 1 of leg 510 and route 2 of leg 514) and the SCG (i.e. route 3 of leg 512 and route 4 of leg 516).

When PDCP duplication according to 3GPP Release 16 is configured, the RAN 500 (e.g., the first access node) provides a set of RLC entities, which will be associated to a PDCP entity. By means of RRC signaling, the RAN 500 (e.g., the first access node) may configure the activation status of the PDCP duplication and the activated RLC entities to which the PDCP of the radio device (e.g., UE) should deliver PDCP data PDUs (e.g., PDUs of the PDCP layer comprising data of the radio device).

The RAN 500 may dynamically control the activation state of the PDCP duplication and/or the activity state of the RLC entities configured for the PDCP duplication (i.e., the RLC entities used to deliver duplicates according to the PDCP duplication) by means of MAC CEs defined in the 3GPP document TS 38.321, version 16.0.0, in clauses 6.1.3.11 and 6.1.3.32, respectively. The MAC CE defined in the 3GPP document TS 38.321, version 16.0.0, in clause 6.1.3.32, allows to activate and deactivate any of the configured RLC entities (e.g., the secondary RLC entities), except for one of the RLC entities (e.g., the primary RLC entity).

The PDCP duplication state of the associated RLC entity may always be activated for a signaling radio bearer (SRB). Thus, the subject technique is preferably applied to a DRB.

Fig. 7 schematically illustrates a data structure of an embodiment of the CE 700.

The CE 700 may be implemented by the 3GPP Release 16 Duplication RLC Activation/Deactivation MAC CE. The CE may have a fixed size and/or may comprise a single octet, e.g., defined as illustrated in Fig. 7 and/or according to the 3GPP document TS 38.321, version 16.0.0, clause 6.1.3.32.

The DRB ID field indicates the identity of DRB for which the MAC CE applies. The length of the field is 5 bits. The RLC field indicates the activation/deactivation status of PDCP duplication for the RLC entity i, wherein i is ascending order of logical channel ID of secondary RLC entities in the order of MCG and SCG, for the DRB.

It is possible that an MCG indicates the activation/deactivation state of RLC entities for the SCG. The UE just follows the received MAC CE, even if the RLC field belongs to the other node.

In 3GPP Release 16, in addition to MAC CE, the network can configure by RRC the activation/deactivation status of the RLC entities. This is controlled by the field duplicationState

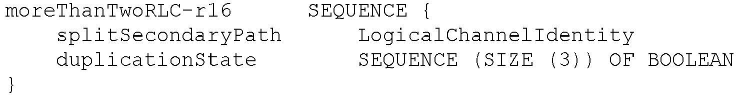

The field duplicationState indicates the initial uplink PDCP duplication state for the associated RLC entities. If set to *true,* the initial PDCP duplication state is activated for the associated RLC entity. The index for the indication is determined by ascending order of logical channel ID of all RLC entities other than the primary RLC entity indicated by *primaryPath* in the order of MCG and SCG, e.g. according to the 3GPP document TS 38.321, version 16.0.0. If the number of associated RLC entities other than the primary RLC entity is two, UE ignores the value in the largest index of this field.

The field splitSecondaryPath is a pointer to a secondary RLC entity to identify which of the multiple configured RLC entities shall be used to fallback to split bearer operation.

The MAC CE activates and deactivates any of the configured RLC entities except for one of the RLC entities. This RLC entity (i.e., the primary RLC entity) will be configured as the primary path. The primary path, like in 3GPP Release 15, defines the RLC entity to which the UE's PDCP delivers PDCP Control PDUs. PDCP will also deliver PDCP Data PDUs to the RLC entity configured as the primary path.

When PDCP duplication is deactivated, the UE will fall back to its initial configuration. This means that the UE will fall back to 3GPP Release 15 DC, or to single carrier combined or not with CA. If the fallback is DC, the network should have provided in the RRC configuration the secondary RLC entity, among all RLC entities configured for PDCP duplication, which will be used in DC. The primary path will be the primary RLC entity in the fallback case.

In what follows, node means MCG/MN or SCG/SN. The nodes are involved in the PDCP duplication.

In one embodiment, one of the nodes controls the MAC CE transmission. This node is called the "MAC CE Controlling Node" or briefly "Controlling Node". The node not in control is called the "MAC CE Non-Controlling Node" or briefly "Non-Controlling Node".

In one follow-up embodiment, it is communicated between the MN and the SN which node is the Controlling Node.

The node hosting the PDCP entity decides how many RLC duplications (up to 4) are used in the manner combining DC and CA, and the initial state of the RLC activation. It initiates the communication between the two nodes related to how to use the dynamic MAC CE.

Two cases of the configuration of the PDCP duplication are described.

In a case 1, there is one primary RLC path in one node (first node) and up to 3 (e.g., secondary) RLC paths in another node (second node). The node hosting the PDCP entity (briefly: the PDCP-hosting node, e.g., the first node) indicates to the first node, or it is determined without further coordination by the first node, that the first node is "the Non-controlling node", i.e., it does not send the dynamic MAC CE to the UE (and/or does not provide feedback as to RLC activation or deactivation). The PDCP-hosting node (e.g., the first node) indicates, e.g., at the same time, to the second node that the second node is "the controlling node" and it is in full control, i.e., it does not need any additional information from the other (e.g., the first) node. This solution works as the primary RLC path is always activated. If the rest of the RLC paths (e.g., the up to 3 secondary paths) are controlled by the second node, the second node may make decisions on the dynamic MAC CE.

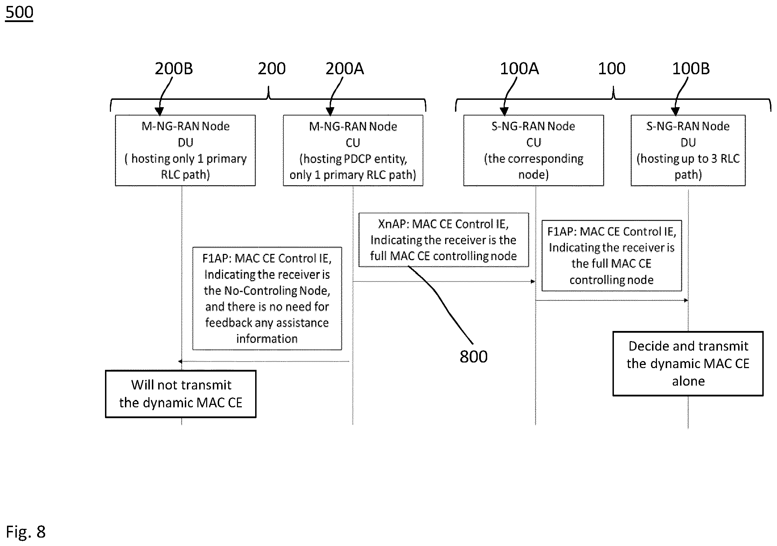

An example to implement the case 1 is either via Control Plane, XnAP and F1AP, or via NR User Plane, by introducing an Indication, e.g., "MAC CE Control Information" IE. This IE can indicate if the node hosting the RLC entity is the Non-Controlling Node 200 or a Full Controlling Node 100 (or controlling node 100). It is further specified that the Non-Controlling Node 200 means that the node hosting the RLC entity should not transmit MAC CE, and it does not need to provide any assistance information for the MAC CE coordination. The "Full Controlling Node" (or controlling node 100) means that the node hosting the RLC entity does not need any assistance information from other nodes when making the MAC CE decision. Refer to Figs. 8 to 10.

In a case 2, the primary RLC path is not the only RLC path hosted by one node. In this case, node coordination is needed. One node is appointed as the control node (or controlling node 100), and it receives the coordination assistance information from the other node. The other node is appointed as no control node (or non-controlling node 200), and it sends the assistance information to the control node (or controlling node 100). The node receives the indication and can accept or reject the role in the response. The role is negotiated between two nodes or appointed by the PDCP hosting node. The PDCP hosting node thus triggers the "No Control node" (or non-controlling node 200) to report information related to MAC CE and forwards the information to the controlling node to process.

In another follow-up embodiment to Case 1 in which the Controlling Node is determined by some conditions, the node hosting the primary RLC path is the Controlling Node. The primary RLC path is configured by the field *primaryPath* in the IE *PDCP-Config* in RRC. Another example is that the Node has the most configured RLC entities for PDCP duplication is the Controlling Node. In another example, if the bearer is a split bearer and both the primary path and split secondary path are configured in RRC, then the node hosting the primary path is the Control Node (or controlling node 100).

The MAC CE controlling node is the only node that is in control of sending the MAC CE to the UE, while the non-controlling node does not send MAC CE.

The MAC CE controlling node requests the non-controlling node to report. The MAC CE controlling node makes the decision and sends the MAC CE containing the activation status of all RLC entities to the UE.

The non-controlling node 200 may base its decision on activating/deactivating RLC entities for activation, or indicating RLC entities for activating/deactivating to the controlling node based on the following criteria.

A first criterion comprises channel state estimates and/or CQI, and/or measurement reports indicative of RSRP and/or RSRQ, and/or HARQ failure rates, and/or RLC retransmissions and/or retransmission failures. A second criterion comprises measured latency and reliability for the radio bearer associated with the RLC entity. A third criterion comprises a load status, i.e. number of UEs 504 connected, sub-bands used, or estimates on future use. A fourth criterion comprises QoS requirements, e.g., latency and/or reliability communicated for the radio bearer associated with the RLC entities.

The triggering of the report can be done, e.g., by triggering the polling of the non-controlling node. The non-controlling node, when it needs to change the activation status of its RLC entities, sends the part of MAC CE related to the RLC entities under its control to the MAC CE controlling node. The MAC CE controlling node makes the decision and sends the MAC CE for all the RLC entities to the UE.

In one variant, instead of sending the activation status of the RLC entities, the non-controlling node indicates to the Control Node (or controlling node 100) the preference of the activation/deactivation of the RLC entities. This can be due to, e.g., the radio quality. One example is that if the radio quality of the serving cells for the activated RLC entities drops significantly, then the non-controlling node can indicate to the controlling node that it would be preferable to enable other RLC entities to fulfil the targeted reliability requirement. However, the controlling node makes the final decision in that it can choose to deactivate the RLC entities associated with the cell of a bad radio quality instead of activating new RLC entities in the non-controlling node. In another example, if there have been multiple RLC entities activated in the non-controlling node, the non-controlling node can indicate to deactivate one of them if both RLC entities have been sending/receiving packets with a very success probability.

The non-controlling node could also indicate to the controlling node and/or report to the control node (or controlling node 100) the assistant information, so that the control node (or controlling node 100) makes a final MAC CE decision.

One example of the implementation is via XnAP, the nodes communicate and determine which node is the MAC CE controlling node. The MAC CE controlling node thus triggers the reporting of the MAC CE from the non-controlling node, by periodic reporting, or reporting upon the change. The reporting could be implemented via UP data frame protocol when the Uplink Data frame is sent, or via XnAP.

The MAC CE controlling Node determines when to send the MAC CE to the UE, e.g. when there is a change for its own RLC entities, or there is a change for the RLC entities controlled by the non-controlling node.

The MAC CE controlling Node could give away the control to another node, e.g. involved RLC entities are mostly controlled by the other node.

In one embodiment, after the MAC CE Controlling Node sends the MAC CE to the UE, it indicates to the non-controlling node the activation/deactivation status of all RLC entities. This indication is necessary, since the final decision on which RLC entities is activated/deactivated is made at the MAC CE controlling node and they can be different from what the Non-controlling Node has indicated to the MAC CE Controlling Node. In another embodiment, the MAC CE controlling Node indicates only the status of the RLC entities under the control or assistance of the non-controlling node 200.

In yet another embodiment the other node indicates to the controlling node a preference of duplication activation of RLC entities hosted in the other node. The preference may be updated based on criteria listed above.

In addition to the MAC CE, the network can configure the activation/deactivation status of the RLC entities through RRC configuration. The above embodiments can be extended and applied to the case where the activation/deactivation status of the RLC entities are controlled by the RRC configuration. In one embodiment, the PDCP entity hosting node is the controlling node.

In another deployment scenario, the activation/deactivation status of the RLC entities is controlled jointly by MAC CE and RRC configuration. Since the MAC CE is sent in a faster time scale than the RRC configuration, the MAC CE controlling node is the node that finally determines the activation/deactivation of the RLC entities. All assistant information is collected at the MAC CE controlling node and the decision is forwarded to the entity that transmits the RRC configuration message.

Fig. 8 schematically illustrates a PDCP hosting node 200, which may be a Master NG-RAN node (M-NG-RAN Node), as the non-controlling node. Furthermore, the example may be an example of case 1.

The control message 800 is implemented as the "MAC CE Control IE" over the control plane, e.g., transmitted from the non-controlling node 200 to the controlling node 100.

Each of the controlling node 100 and the non-controlling node 200 may be split into a centralized unit (CU) 100A and 200A, respectively, and a distributed unit 100B and 200B, respectively.

The control message may be exchanged between the CUs 100A and 100B.

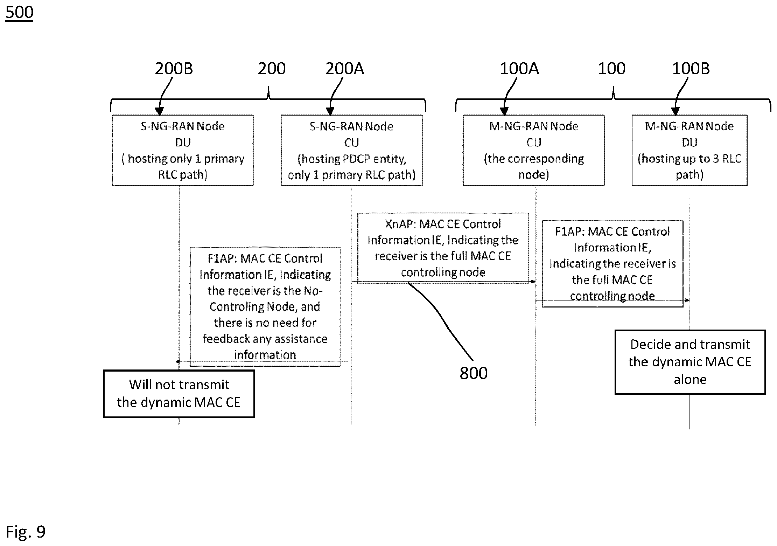

Fig. 9 schematically illustrates the PDCP hosting node, which may be a Secondary NG-RAN node (S-NG-RAN node), as the non-controlling node 200. The control message 800 is introduced to indicate how the MAC CE 700 should be used. The approach is similar to Fig. 8 (e.g., with the roles of master and secondary node interchanged). The control message 800 is implemented by a "MAC CE Control Information IE".

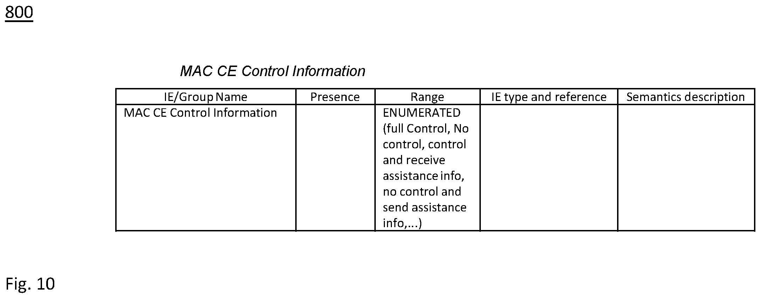

Fig. 10 schematically illustrates an example of implementing the control message 800, e.g., as a MAC CE Control Information IE, preferably over the Control Plane (e.g., using XnAP and/or F1AP).

The control message 800 is indicative of at least two out of the four enumerated values. Enumerated value "full control" and "No control" are for the case 1, so that one node would be in "full control", and the other node would be in "No control". Enumerated value "control and receive assistance info" and "no control and send assistance info" are for case 2.

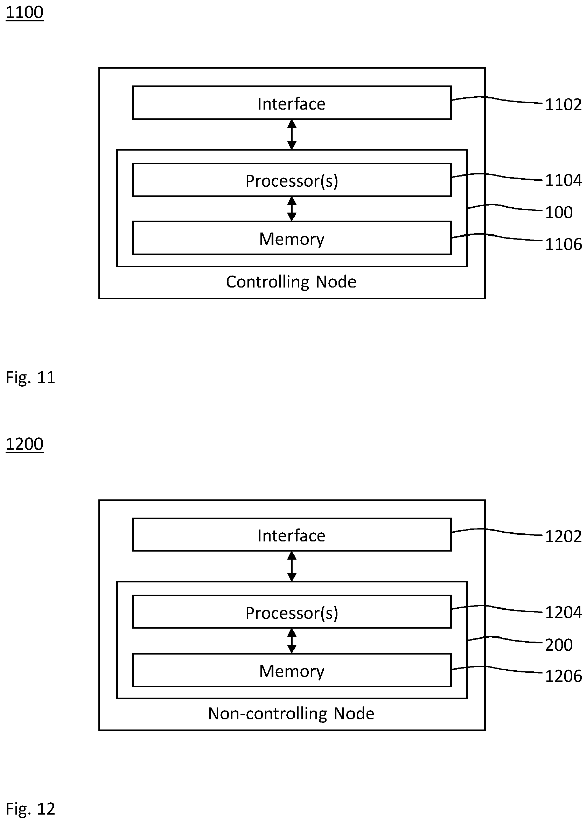

Fig. 11 shows a schematic block diagram for an embodiment of the device 100. The device 100 comprises one or more processors 1104 for performing the method 300 and memory 1106 coupled to the processors 1104. For example, the memory 1106 may be encoded with instructions that implement at least one of the modules 102 and 104.

The one or more processors 1104 may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the device 100, such as the memory 1106, base station functionality. For example, the one or more processors 1104 may execute instructions stored in the memory 1106. Such functionality may include providing various features and steps discussed herein, including any of the benefits disclosed herein. The expression "the device being operative to perform an action" may denote the device 100 being configured to perform the action.

As schematically illustrated in Fig. 11, the device 100 may be embodied by a controlling node 1100, e.g., functioning as a base station. The controlling node 1100 comprises a radio interface 1102 coupled to the device 100 for radio communication with one or more UEs.

Fig. 12 shows a schematic block diagram for an embodiment of the device 200. The device 200 comprises one or more processors 1204 for performing the method 400 and memory 1206 coupled to the processors 1204. For example, the memory 1206 may be encoded with instructions that implement at least one of the modules 202 and 204.

The one or more processors 1204 may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the device 100, such as the memory 1206, base station functionality. For example, the one or more processors 1204 may execute instructions stored in the memory 1206. Such functionality may include providing various features and steps discussed herein, including any of the benefits disclosed herein. The expression "the device being operative to perform an action" may denote the device 200 being configured to perform the action.

As schematically illustrated in Fig. 12, the device 200 may be embodied by a non-controlling node 1200, e.g., functioning as a base station. The non-controlling node 1200 comprises a radio interface 1202 coupled to the device 200 for radio communication with one or more UEs.

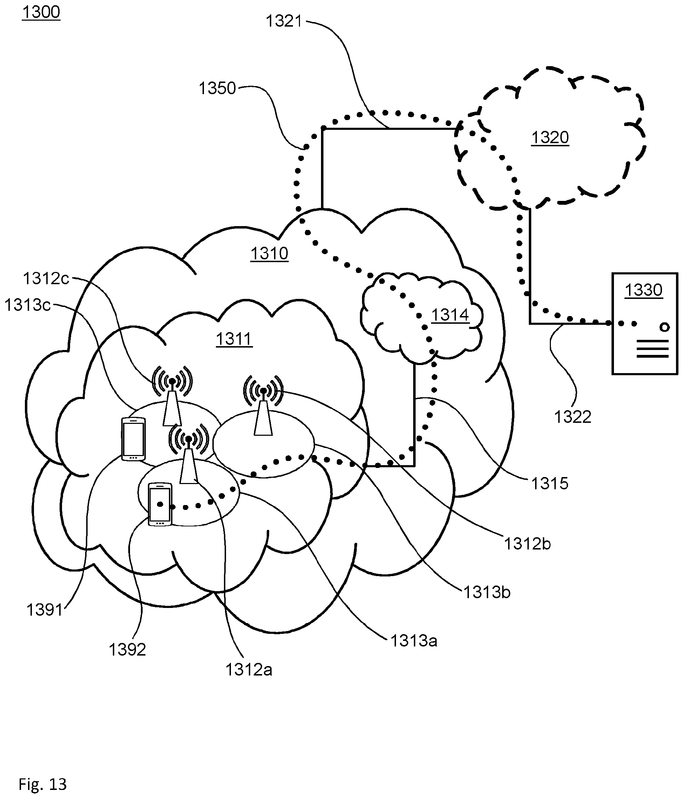

With reference to Fig. 13, in accordance with an embodiment, a communication system 1300 includes a telecommunication network 1310, such as a 3GPP-type cellular network, which comprises an access network 1311, such as a radio access network, and a core network 1314. The access network 1311 comprises a plurality of base stations 1312a, 1312b, 1312c, such as NBs, eNBs, gNBs or other types of wireless access points, each defining a corresponding coverage area 1313a, 1313b, 1313c. Each base station 1312a, 1312b, 1312c is connectable to the core network 1314 over a wired or wireless connection 1315. A first user equipment (UE) 1391 located in coverage area 1313c is configured to wirelessly connect to, or be paged by, the corresponding base station 1312c. A second UE 1392 in coverage area 1313a is wirelessly connectable to the corresponding base station 1312a. While a plurality of UEs 1391, 1392 are illustrated in this example, the disclosed embodiments are equally applicable to a situation where a sole UE is in the coverage area or where a sole UE is connecting to the corresponding base station 1312.

Any of the base stations 1312 and the UEs 1391, 1392 may embody the device 100.

The telecommunication network 1310 is itself connected to a host computer 1330, which may be embodied in the hardware and/or software of a standalone server, a cloud-implemented server, a distributed server or as processing resources in a server farm. The host computer 1330 may be under the ownership or control of a service provider, or may be operated by the service provider or on behalf of the service provider. The connections 1321, 1322 between the telecommunication network 1310 and the host computer 1330 may extend directly from the core network 1314 to the host computer 1330 or may go via an optional intermediate network 1320. The intermediate network 1320 may be one of, or a combination of more than one of, a public, private or hosted network; the intermediate network 1320, if any, may be a backbone network or the Internet; in particular, the intermediate network 1320 may comprise two or more sub-networks (not shown).

The communication system 1300 of Fig. 13 as a whole enables connectivity between one of the connected UEs 1391, 1392 and the host computer 1330. The connectivity may be described as an over-the-top (OTT) connection 1350. The host computer 1330 and the connected UEs 1391, 1392 are configured to communicate data and/or signaling via the OTT connection 1350, using the access network 1311, the core network 1314, any intermediate network 1320 and possible further infrastructure (not shown) as intermediaries. The OTT connection 1350 may be transparent in the sense that the participating communication devices through which the OTT connection 1350 passes are unaware of routing of uplink and downlink communications. For example, a base station 1312 need not be informed about the past routing of an incoming downlink communication with data originating from a host computer 1330 to be forwarded (e.g., handed over) to a connected UE 1391. Similarly, the base station 1312 need not be aware of the future routing of an outgoing uplink communication originating from the UE 1391 towards the host computer 1330.

By virtue of the method 200 being performed by any one of the base stations 1312, the performance of the OTT connection 1350 can be improved, e.g., in terms of increased throughput and/or reduced latency.

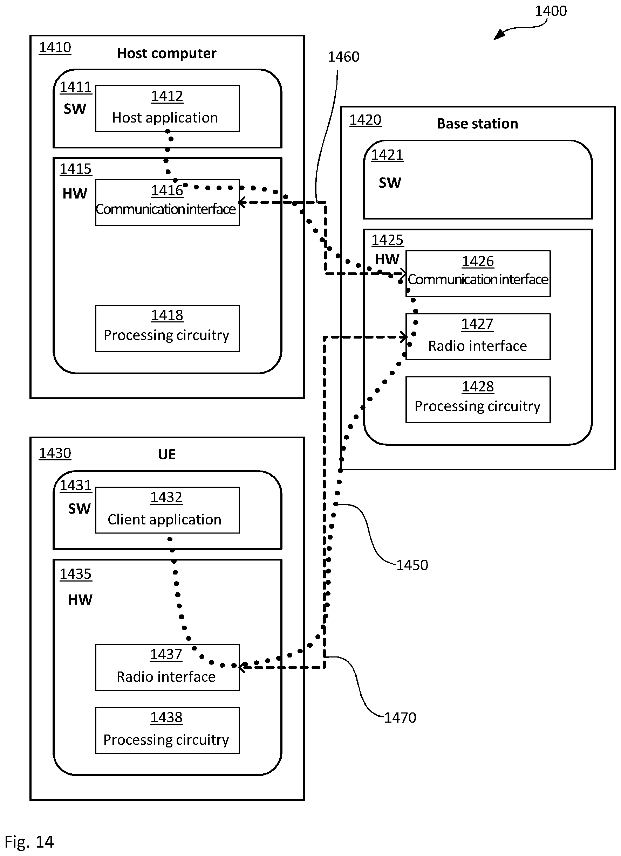

Example implementations, in accordance with an embodiment of the UE, base station and host computer discussed in the preceding paragraphs, will now be described with reference to Fig. 14. In a communication system 1400, a host computer 1410 comprises hardware 1415 including a communication interface 1416 configured to set up and maintain a wired or wireless connection with an interface of a different communication device of the communication system 1400. The host computer 1410 further comprises processing circuitry 1418, which may have storage and/or processing capabilities. In particular, the processing circuitry 1418 may comprise one or more programmable processors, application-specific integrated circuits, field programmable gate arrays or combinations of these (not shown) adapted to execute instructions. The host computer 1410 further comprises software 1411, which is stored in or accessible by the host computer 1410 and executable by the processing circuitry 1418. The software 1411 includes a host application 1412. The host application 1412 may be operable to provide a service to a remote user, such as a UE 1430 connecting via an OTT connection 1450 terminating at the UE 1430 and the host computer 1410. In providing the service to the remote user, the host application 1412 may provide user data, which is transmitted using the OTT connection 1450. The user data may depend on the location of the UE 1430. The user data may comprise auxiliary information or precision advertisements (also: ads) delivered to the UE 1430. The location may be reported by the UE 1430 to the host computer, e.g., using the OTT connection 1450, and/or by the base station 1420, e.g., using a connection 1460.

The communication system 1400 further includes a base station 1420 provided in a telecommunication system and comprising hardware 1425 enabling it to communicate with the host computer 1410 and with the UE 1430. The hardware 1425 may include a communication interface 1426 for setting up and maintaining a wired or wireless connection with an interface of a different communication device of the communication system 1400, as well as a radio interface 1427 for setting up and maintaining at least a wireless connection 1470 with a UE 1430 located in a coverage area (not shown in Fig. 14) served by the base station 1420. The communication interface 1426 may be configured to facilitate a connection 1460 to the host computer 1410. The connection 1460 may be direct, or it may pass through a core network (not shown in Fig. 14) of the telecommunication system and/or through one or more intermediate networks outside the telecommunication system. In the embodiment shown, the hardware 1425 of the base station 1420 further includes processing circuitry 1428, which may comprise one or more programmable processors, application-specific integrated circuits, field programmable gate arrays or combinations of these (not shown) adapted to execute instructions. The base station 1420 further has software 1421 stored internally or accessible via an external connection.

The communication system 1400 further includes the UE 1430 already referred to. Its hardware 1435 may include a radio interface 1437 configured to set up and maintain a wireless connection 1470 with a base station serving a coverage area in which the UE 1430 is currently located. The hardware 1435 of the UE 1430 further includes processing circuitry 1438, which may comprise one or more programmable processors, application-specific integrated circuits, field programmable gate arrays or combinations of these (not shown) adapted to execute instructions. The UE 1430 further comprises software 1431, which is stored in or accessible by the UE 1430 and executable by the processing circuitry 1438. The software 1431 includes a client application 1432. The client application 1432 may be operable to provide a service to a human or non-human user via the UE 1430, with the support of the host computer 1410. In the host computer 1410, an executing host application 1412 may communicate with the executing client application 1432 via the OTT connection 1450 terminating at the UE 1430 and the host computer 1410. In providing the service to the user, the client application 1432 may receive request data from the host application 1412 and provide user data in response to the request data. The OTT connection 1450 may transfer both the request data and the user data. The client application 1432 may interact with the user to generate the user data that it provides.

It is noted that the host computer 1410, base station 1420 and UE 1430 illustrated in Fig. 14 may be identical to the host computer 1330, one of the base stations 1312a, 1312b, 1312c and one of the UEs 1391, 1392 of Fig. 13, respectively. This is to say, the inner workings of these entities may be as shown in Fig. 14, and, independently, the surrounding network topology may be that of Fig. 13.

In Fig. 14, the OTT connection 1450 has been drawn abstractly to illustrate the communication between the host computer 1410 and the UE 1430 via the base station 1420, without explicit reference to any intermediary devices and the precise routing of messages via these devices. Network infrastructure may determine the routing, which it may be configured to hide from the UE 1430 or from the service provider operating the host computer 1410, or both. While the OTT connection 1450 is active, the network infrastructure may further take decisions by which it dynamically changes the routing (e.g., on the basis of load balancing consideration or reconfiguration of the network).

The wireless connection 1470 between the UE 1430 and the base station 1420 is in accordance with the teachings of the embodiments described throughout this disclosure. One or more of the various embodiments improve the performance of OTT services provided to the UE 1430 using the OTT connection 1450, in which the wireless connection 1470 forms the last segment. More precisely, the teachings of these embodiments may reduce the latency and improve the data rate and thereby provide benefits such as better responsiveness and improved QoS.

A measurement procedure may be provided for the purpose of monitoring data rate, latency, QoS and other factors on which the one or more embodiments improve. There may further be an optional network functionality for reconfiguring the OTT connection 1450 between the host computer 1410 and UE 1430, in response to variations in the measurement results. The measurement procedure and/or the network functionality for reconfiguring the OTT connection 1450 may be implemented in the software 1411 of the host computer 1410 or in the software 1431 of the UE 1430, or both. In embodiments, sensors (not shown) may be deployed in or in association with communication devices through which the OTT connection 1450 passes; the sensors may participate in the measurement procedure by supplying values of the monitored quantities exemplified above, or supplying values of other physical quantities from which software 1411, 1431 may compute or estimate the monitored quantities. The reconfiguring of the OTT connection 1450 may include message format, retransmission settings, preferred routing etc.; the reconfiguring need not affect the base station 1420, and it may be unknown or imperceptible to the base station 1420. Such procedures and functionalities may be known and practiced in the art. In certain embodiments, measurements may involve proprietary UE signaling facilitating the host computer's 1410 measurements of throughput, propagation times, latency and the like. The measurements may be implemented in that the software 1411, 1431 causes messages to be transmitted, in particular empty or "dummy" messages, using the OTT connection 1450 while it monitors propagation times, errors etc.

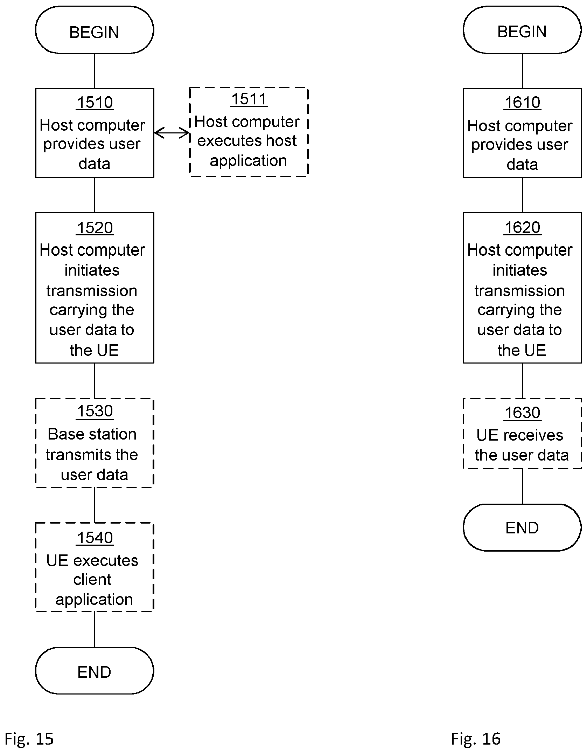

Fig. 15 is a flowchart illustrating a method implemented in a communication system, in accordance with one embodiment. The communication system includes a host computer, a base station and a UE which may be those described with reference to Figs. 13 and 14. For simplicity of the present disclosure, only drawing references to Fig. 15 will be included in this paragraph. In a first step 1510 of the method, the host computer provides user data. In an optional substep 1511 of the first step 1510, the host computer provides the user data by executing a host application. In a second step 1520, the host computer initiates a transmission carrying the user data to the UE. In an optional third step 1530, the base station transmits to the UE the user data which was carried in the transmission that the host computer initiated, in accordance with the teachings of the embodiments described throughout this disclosure. In an optional fourth step 1540, the UE executes a client application associated with the host application executed by the host computer.

Fig. 16 is a flowchart illustrating a method implemented in a communication system, in accordance with one embodiment. The communication system includes a host computer, a base station and a UE which may be those described with reference to Figs. 13 and 14. For simplicity of the present disclosure, only drawing references to Fig. 16 will be included in this paragraph. In a first step 1610 of the method, the host computer provides user data. In an optional substep (not shown) the host computer provides the user data by executing a host application. In a second step 1620, the host computer initiates a transmission carrying the user data to the UE. The transmission may pass via the base station, in accordance with the teachings of the embodiments described throughout this disclosure. In an optional third step 1630, the UE receives the user data carried in the transmission.

As has become apparent from above description, embodiments of the technique allow using a dynamic MAC CE, e.g., without signaling overloading. Alternatively or in addition, the activity state can be controlled more robustly.

Furthermore, in 3GPP Release 16, there is no inter-node coordination, which means the MAC CE according to 3GPP Release 16 is not useful or could lead to activity states for secondary RLC entities that are inconsistent between the node comprising the secondary RLC entity and the radio device receiving the MAC CE. Embodiments of the technique can, at least for some PDCP duplication deployment, benefit from the dynamic MAC CE, e.g. already according to 3GPP Release 16.

Any one of the embodiments may be implemented based on or as an extension of the 3GPP document TS 38.423, version 16.0.0; and/or the 3GPP document TS 38.473, version 16.0.0; and/or the 3GPP document TS 38.425, version 16.0.0.

Many advantages of the present invention will be fully understood from the foregoing description, and it will be apparent that various changes may be made in the form, construction and arrangement of the units and devices without departing from the scope of the invention and/or without sacrificing all of its advantages. Since the invention can be varied in many ways, it will be recognized that the invention may be implemented according to and/or may be limited only by the scope of the following list of claims.

## Claims

1. A method (300) of transmitting a control element, CE (700), for selectively activating and deactivating one or more secondary radio link control, RLC, entities (522; 524; 526) configured for packet duplication in a radio communication between a radio device (504) and a radio access network, RAN, the RAN comprising a first node (200; 100) and a second node (100; 200), wherein the first node (200; 100) comprises a primary RLC entity (520) configured for the packet duplication and the second node (100; 200) comprises at least one of the one or more secondary RLC entities (522; 524; 526), the method (300) **characterised by**:
exchanging a control message (800) between the first node (200; 100) and the second node (100; 200), the control message (800) being indicative of which one of the first node (200; 100) and the second node (100; 200) is to perform the step of transmitting (302) the CE (700) to the radio device (504); and
transmitting (302) the CE (700) from the RAN to the radio device (504),
wherein the CE (700) is indicative of an activity state of each of the one or more secondary RLC entities (522; 524; 526) configured for the packet duplication.

2. The method (300) of claim 1, wherein the method (300) is performed by the second node (100; 200), and/or
wherein the CE (700) is transmitted from one of the first node (200; 100) and the second node (100; 200), and/or
wherein the CE (700) is transmitted from the second node (100; 200) to the radio device (504).

3. The method (300) of claim 1 or 2, wherein exchanging the control message (800) comprises:
sending the control message (800) from the second node (100; 200) to the first node (200; 100) or receiving the control message (800) from the first node (200; 100) at the second node (100; 200), wherein the control message (800) triggers the second node (100; 200) to transmit (302) the CE (700) to the radio device (504), or
sending the control message (800) from the second node (100; 200) to the first node (200; 100) or receiving the control message (800) from the first node (200; 100) at the second node (100; 200), wherein the control message (800) prevents the first node (200; 100) from transmitting the CE (700) to the radio device (504).

4. The method (300) of claim 3, wherein each of the first node (200; 100) and the second node (100; 200) comprises a central unit, CU, and a distributed unit, DU,
optionally wherein the DU of the first node (200; 100) comprises the primary RLC entity (520) and/or the DU of the second node (100; 200) comprises the at least one of the one or more secondary RLC entities (522; 524; 526).

5. The method (300) of claim 4, wherein the CU of the first node (200; 100) comprises a packet data convergence protocol, PDCP, entity, the PDCP entity being an aggregation point of the packet duplication, and/or
wherein the control message (800) is sent from the CU of the second node (100; 200) to the CU of the first node (200; 100) or received from the CU of the first node (200; 100) at the CU of the second node (100; 200), optionally wherein the control message (800) is forwarded from the CU of the second node (100; 200) to the DU of the second node (100; 200), further optionally wherein the DU of the second node (100; 200), optionally a medium access control, MAC, layer of the second node (100; 200), transmits (302) the CE (700) to the radio device (504) in response to the control message (800).

6. The method (300) of any one of claims 1 to 5, wherein the control message (800) is indicative of one of:
exclusive control for the node receiving the control message as to the determining (304) of the activity state of the secondary RLC entities (522; 524; 526) and/or as to the transmitting (302) of the CE;
no control for the node receiving the control message as to the determining (304) of the activity state of the secondary RLC entities (522; 524; 526) and/or as to the transmitting (302) of the CE;
direct control for the node receiving the control message as to the determining (304) of the activity state of the secondary RLC entities (522; 524; 526) based on received assistance information and/or exclusive control as to the transmitting (302) of the CE; and
indirect control for the node receiving the control message as to the determining (304) of the activity state of the secondary RLC entities (522; 524; 526) based on sent assistance information and/or no control as to the transmitting (302) of the CE.

7. The method (300) of any one of claims 1 to 6, wherein the activity state indicated by the CE for each of the one or more secondary RLC entities (522; 524; 526) comprises either activating or deactivating the respective one of the one or more secondary RLC entities (522; 524; 526), and/or
wherein the method (300) further comprises or initiates determining (304) which of the one or more secondary RLC entities (522; 524; 526) is to be activated or deactivated, optionally the method (300) further comprises or initiates receiving assistance information from the first node (200; 100) at the second node (100; 200), wherein the determination (304) depends on the assistance information.

8. The method (300) of any one of claims 1 to 7, wherein the radio communication between the radio device (504) and the RAN comprises a data radio bearer, DRB, and
wherein the primary RLC entity (520) and the one or more secondary RLC entities (522; 524; 526) are configured for the packet duplication of the DRB or wherein the method (300) further comprises or initiates transmitting, to the radio device (504), an initial control message indicative of activating the packet duplication for the DRB.

9. The method (300) of any one of claims 1 to 8, wherein each of the RLC entities is associated with a different carrier and/or a different cell and/or a different logical channel and/or a different RLC path, or
wherein one of the first node (200; 100) and the second node (100; 200) is a master node, MN, comprising a radio resource control, RRC, layer, and wherein the other one of the first node (200; 100) and the second node (100; 200) is a secondary node, SN, the method comprising:
transmitting, to the radio device (504), or receiving, from the radio device (504), RRC signaling for at least one of establishment, configuration, maintenance, and release of a data radio bearer of the packet duplication.

10. The method (300) of any one of claims 1 to 9, wherein the first node (200; 100) comprises a packet data convergence protocol, PDCP, entity, and
wherein the PDCP entity is an aggregation point of the packet duplication, or wherein the method further comprises or initiates at least one of:
determining a number of the secondary RLC entities (522; 524; 526) configured for the packet duplication;
transmitting, to the second node (100; 200), an initial control message indicative of activating the packet duplication and/or a number of the at least one secondary RLC entity (522; 524; 526) at the second node (100; 200) and/or an initial state of the activity state for each of the at least one secondary RLC entity (522; 524; 526);
and
performing the packet duplication by the PDCP entity.

11. The method (300) of any one of claims 1 to 10, wherein the packet duplication is based on at least one of dual connectivity, DC, and carrier aggregation, CA, or
wherein the CE is a medium access control, MAC, CE, or
wherein the CE is indicative of the activity state of each of 3 secondary RLC entities (522; 524; 526) or up to 3 secondary RLC entities (522; 524; 526).

12. The method (300) of any one of claims 1 to 11, wherein the first node (200; 100) further comprises at least one of the one or more secondary RLC entities (522; 524; 526), and
wherein the control message is exchanged between the first node (200; 100) to the second node (100; 200), or wherein the method further comprises or initiates determining which one of the first node (200; 100) and the second node (100; 200) is to perform the step of transmitting (302) the CE to the radio device (504), wherein the determination is based on a condition, optionally wherein at least one of:
- the condition requires that the one of the first node (200; 100) and the second node (100; 200), which comprises the PDCP entity for the packet duplication, performs the step of transmitting (302),
- the condition requires that the one of the first node (200; 100) and the second node (100; 200), which comprises more RLC entities configured for the packet duplication than the other one, performs the step of transmitting (302),
- the packet duplication is based on a split bearer, and wherein the condition requires that the first node (200; 100) comprising the primary RLC entity (520) performs the step of transmitting (302),
- the one of the first node (200; 100) and the second node(100; 200), which performs the step of transmitting (302), performs the step of determining (304) which of the one or more secondary RLC entities (522; 524; 526) is to be activated or deactivated.

13. A method (400) of assisting in transmitting a control element, CE, for selectively activating and deactivating one or more secondary radio link control, RLC, entities configured for packet duplication in a radio communication between a radio device (504) and a radio access network, RAN, the RAN comprising a first node (200; 100) and a second node (100; 200), wherein the first node (200; 100) comprises a primary RLC entity (520) configured for the packet duplication and the second node (100; 200) comprises at least one of the one or more secondary RLC entities (522; 524; 526), the method **characterised by**:
sending (402) assistance information to one of the first node (200; 100) and the second node (100; 200), which transmits the CE to the radio device (504), wherein the CE is indicative of an activity state of each of the one or more secondary RLC entities (522; 524; 526) configured for the packet duplication depending on the assistance information.

14. The method (400) of claim 13, wherein the method (400) is performed by the first node (200; 100), and/or further comprises the steps of any one of claims 2 to 12 or any step corresponding thereto.

15. A computer program product comprising program code portions for performing the steps of any one of the claims 1 to 12 or 13 to 14 when the computer program product is executed on one or more computing devices (1104; 1204), optionally stored on a computer-readable recording medium (1106; 1206).

16. A controlling node (100) for transmitting a control element, CE, for selectively activating and deactivating one or more secondary radio link control, RLC, entities configured for packet duplication in a radio communication between a radio device (504) and a radio access network, RAN, the RAN comprising a first node (200; 100) and a second node (100; 200), wherein the first node (200; 100) comprises a primary RLC entity (520) configured for the packet duplication and the second node (100; 200) comprises at least one of the one or more secondary RLC entities (522; 524; 526), **characterised in that** it is configured to:
exchange a control message (800) between the first node (200; 100) and the second node (100; 200), the control message (800) being indicative of which one of the first node (200; 100) and the second node (100; 200) is to perform the step of transmitting (302) the CE (700) to the radio device (504); and
transmit the CE from the RAN to the radio device (504), wherein the CE is indicative of an activity state of each of the one or more secondary RLC entities (522; 524; 526) configured for the packet duplication.

17. A non-controlling node (200) for assisting in transmitting a control element, CE, for selectively activating and deactivating one or more secondary radio link control, RLC, entities configured for packet duplication in a radio communication between a radio device (504) and a radio access network, RAN, the RAN comprising a first node (200; 100) and a second node (100; 200), wherein the first node (200; 100) comprises a primary RLC entity (520) configured for the packet duplication and the second node (100; 200) comprises at least one of the one or more secondary RLC entities (522; 524; 526), **characterised in that** it is configured to:
send assistance information to one of the first node (200; 100) and the second node (100; 200), which transmits the CE to the radio device (504), wherein the CE is indicative of an activity state of each of the one or more secondary RLC entities (522; 524; 526) configured for the packet duplication depending on the assistance information.

## Patentansprüche

1. Verfahren (300) zur Übertragung eines Steuerelements, CE, (700) zum selektiven Aktivieren und Deaktivieren einer oder mehrerer sekundärer Funkverbindungssteuerungsentitäten, RLC-Entitäten, (522; 524; 526), die für Paketduplizierung bei einer Funkkommunikation zwischen einer Funkvorrichtung (504) und einem Funkzugangsnetzwerk, RAN, ausgelegt sind, wobei das RAN einen ersten Knoten (200; 100) und einen zweiten Knoten (100; 200) umfasst, wobei der erste Knoten (200; 100) eine primäre RLC-Entität (520) umfasst, die für die Paketduplizierung ausgelegt ist, und der zweite Knoten (100; 200) mindestens eine der einen oder der mehreren sekundären RLC-Entitäten (522; 524; 526) umfasst, wobei das Verfahren (300) **gekennzeichnet ist durch**:
Austauschen einer Steuernachricht (800) zwischen dem ersten Knoten (200; 100) und dem zweiten Knoten (100; 200), wobei die Steuernachricht (800) angibt, welcher von dem ersten Knoten (200; 100) und dem zweiten Knoten (100; 200) den Schritt des Übertragens (302) des CE (700) an die Funkvorrichtung (504) ausführen soll; und
Übertragen (302) des CE (700) vom RAN an die Funkvorrichtung (504), wobei das CE (700) einen Aktivitätszustand jeder der einen oder der mehreren sekundären RLC-Entitäten (522; 524; 526) angibt, die für die Paketduplizierung ausgelegt ist.

2. Verfahren (300) nach Anspruch 1, wobei das Verfahren vom zweiten Knoten (100; 200) durchgeführt wird und/oder
wobei das CE (700) von einem des ersten Knotens (200; 100) und des zweiten Knotens (100; 200) übertragen wird und/oder
wobei das CE (700) vom zweiten Knoten (100; 200) an die Funkvorrichtung (504) übertragen wird.

3. Verfahren (300) nach Anspruch 1 oder 2, wobei das Austauschen der Steuernachricht (800) Folgendes umfasst:
Senden der Steuernachricht (800) vom zweiten Knoten (100; 200) an den ersten Knoten (200; 100) oder Empfangen der Steuernachricht (800) vom ersten Knoten (200; 100) am zweiten Knoten (100; 200), wobei die Steuernachricht (800) den zweiten Knoten (100; 200) zum Übertragen (302) des CE (700) an die Funkvorrichtung (504) auslöst, oder
Senden der Steuernachricht (800) vom zweiten Knoten (100; 200) an den ersten Knoten (200; 100) oder Empfangen der Steuernachricht (800) vom ersten Knoten (200; 100) am zweiten Knoten (100; 200), wobei die Steuernachricht (800) den ersten Knoten (200; 100) daran hindert, das CE (700) an die Funkvorrichtung (504) zu übertragen.

4. Verfahren (300) nach Anspruch 3, wobei jeder von dem ersten Knoten (200; 100) und dem zweiten Knoten (100; 200) eine zentrale Einheit, CU, und eine verteilte Einheit, DU, umfasst,
wobei optional die DU des ersten Knotens (200; 100) die primäre RLC-Entität (520) umfasst und/oder die DU des zweiten Knotens (100; 200) die mindestens eine der einen oder der mehreren sekundären RLC-Entitäten (522; 524; 526) umfasst.

5. Verfahren (300) nach Anspruch 4, wobei die CU des ersten Knotens (200; 100) eine Paketdatenkonvergenzprotokoll-Entität, PDCP-Entität, umfasst, wobei die PDCP-Entität ein Aggregationspunkt der Paketduplizierung ist und/oder
wobei die Steuernachricht (800) von der CU des zweiten Knotens (100; 200) an die CU des ersten Knotens (200; 100) gesendet oder von der CU des ersten Knotens (200; 100) an der CU des zweiten Knotens (100; 200) empfangen wird, wobei optional die Steuernachricht (800) von der CU des zweiten Knotens (100; 200) an die DU des zweiten Knotens (100; 200) weitergeleitet wird, wobei ferner optional die DU des zweiten Knotens (100; 200), optional eine Medienzugriffssteuerungsschicht, MAC-Schicht, des zweiten Knotens (100; 200), das CE (700) in Reaktion auf die Steuernachricht (800) an die Funkvorrichtung (504) überträgt (302).

6. Verfahren (300) nach einem der Ansprüche 1 bis 5, wobei die Steuernachricht (800) eines von Folgenden angibt:
exklusive Steuerung für den Knoten, der die Steuernachricht empfängt, im Hinblick auf das Bestimmen (304) des Aktivitätszustands der sekundären RLC-Entitäten (522; 524; 526) und/oder im Hinblick auf das Übertragen (302) des CE;
keine Steuerung für den Knoten, der die Steuernachricht empfängt, im Hinblick auf das Bestimmen (304) des Aktivitätszustands der sekundären RLC-Entitäten (522; 524; 526) und/oder im Hinblick auf das Übertragen (302) des CE;
direkte Steuerung für den Knoten, der die Steuernachricht empfängt, im Hinblick auf das Bestimmen (304) des Aktivitätszustands der sekundären RLC-Entitäten (522; 524; 526) basierend auf empfangenen Unterstützungsinformationen und/oder exklusive Steuerung im Hinblick auf das Übertragen (302) des CE; und
indirekte Steuerung für den Knoten, der die Steuernachricht empfängt, im Hinblick auf das Bestimmen (304) des Aktivitätszustands der sekundären RLC-Entitäten (522; 524; 526) basierend auf gesendeten Unterstützungsinformationen und/oder keine Steuerung im Hinblick auf das Übertragen (302) des CE.

7. Verfahren (300) nach einem der Ansprüche 1 bis 6, wobei der Aktivitätszustand, der durch das CE für jede der einen oder der mehreren sekundären RLC-Entitäten (522; 524; 526) angegeben wird, entweder Aktivieren oder Deaktivieren der jeweiligen der einen oder der mehreren RLC-Entitäten (522; 524; 526) umfasst, und/oder
wobei das Verfahren (300) ferner Bestimmen (304) umfasst oder initiiert, welche der einen oder der mehreren sekundären RLC-Entitäten (522; 524; 526) aktiviert oder deaktiviert werden soll, wobei optional das Verfahren (300) Empfangen von Unterstützungsinformationen vom ersten Knoten (200; 100) am zweiten Knoten (100; 200) umfasst oder initiiert, wobei die Bestimmung (304) von den Unterstützungsinformationen abhängt.

8. Verfahren (300) nach einem der Ansprüche 1 bis 7, wobei die Funkkommunikation zwischen der Funkvorrichtung (504) und dem RAN einen Datenfunkträger, DRB, umfasst und
wobei die primäre RLC-Entität (520) und die eine oder die mehreren sekundären RLC-Entitäten (522; 524; 526) für die Paketduplizierung des DRB ausgelegt sind oder das Verfahren (300) ferner Übertragen einer anfänglichen Steuernachricht, die Aktivieren der Paketduplizierung für den DRB angibt, an die Funkvorrichtung (504) umfasst oder initiiert.

9. Verfahren (300) nach einem der Ansprüche 1 bis 8, wobei jede der RLC-Entitäten mit einem unterschiedlichen Träger und/oder einer unterschiedlichen Zelle und/oder einem unterschiedlichen Logikkanal und/oder einem unterschiedlichen RLC-Pfad assoziiert ist oder
wobei einer von dem ersten Knoten (200; 100) und dem zweiten Knoten (100; 200) ein Masterknoten, MN, ist, der eine Funkressourcensteuerungsschicht, RRC-Schicht, umfasst, und wobei der andere von dem ersten Knoten (200; 100) und dem zweiten Knoten (100; 200) ein sekundärer Knoten, SN, ist, wobei das Verfahren Folgendes umfasst:
Übertragen an die Funkvorrichtung (504) oder Empfangen von der Funkvorrichtung (504) von RRC-Signalisierung für mindestens eines von Aufbau, Konfiguration, Aufrechterhaltung und Freigabe eines Datenfunkträgers der Paketduplizierung.

10. Verfahren (300) nach einem der Ansprüche 1 bis 9, wobei der erste Knoten (200; 100) eine Paketdatenkonvergenzprotokoll-Entität, PDCP-Entität, umfasst und
wobei die PDCP-Entität ein Aggregationspunkt der Paketduplizierung ist oder wobei das Verfahren ferner mindestens eines von Folgendem umfasst oder initiiert:
Bestimmen einer Anzahl von sekundären RLC-Entitäten (522; 524; 526), die für die Paketduplizierung ausgelegt ist;
Übertragen einer anfänglichen Steuernachricht, die Aktivieren der Paketduplizierung und/oder eine Anzahl der mindestens einen sekundären RLC-Entität (522; 524; 526) am zweiten Steuerknoten (100; 200) und/oder einen anfänglichen Zustand des Aktivitätszustand für jede der mindestens einen sekundären RLC-Entität (522; 524; 526) angibt, an den zweiten Knoten (100; 200);
und
Durchführen der Paketduplizierung durch die PDCP-Entität.

11. Verfahren (300) nach einem der Ansprüche 1 bis 10, wobei die Paketduplizierung auf mindestens einer von Dualkonnektivität, DC, und Trägeraggregation, CA, basiert oder
wobei das CE ein Medienzugriffssteuerungs-CE, MAC-CE, ist oder
wobei das CE den Aktivitätszustand jeder von 3 sekundären RLC-Entitäten (522; 524; 526) oder bis zu 3 sekundären RLC-Entitäten (522; 524; 526) angibt.

12. Verfahren (300) nach einem der Ansprüche 1 bis 11, wobei der erste Knoten (200; 100) ferner mindestens eine der einen oder der mehreren sekundären RLC-Entitäten (522; 524; 526) umfasst, und
wobei die Steuernachricht zwischen dem ersten Knoten (200; 100) und dem zweiten Knoten (100; 200) ausgetauscht wird oder wobei das Verfahren ferner Bestimmen, welcher von dem ersten Knoten (200; 100) und dem zweiten Knoten (100; 200) den Schritt des Übertragens (302) des CE an die Funkvorrichtung (504) ausführen soll, umfasst oder initiiert, wobei die Bestimmung auf einer Bedingung basiert, wobei optional mindestens eines von Folgendem:
- die Bedingung erfordert, dass der eine von dem ersten Knoten (200; 100) und dem zweiten Knoten (100; 200), der die PDCP-Paketduplizierung umfasst, den Schritt des Übertragens (302) ausführt,
- die Bedingung erfordert, dass der eine von dem ersten Knoten (200; 100) und dem zweiten Knoten (100; 200), der mehr RLC-Entitäten, die für die Paketduplizierung ausgelegt sind, als der andere umfasst, den Schritt des Übertragens (302) ausführt,
- die Paketduplizierung basiert auf einem geteilten Träger, und wobei die Bedingung erfordert, dass der erste Knoten (200; 100), der die primäre RLC-Entität (520) umfasst, den Schritt des Übertragens (302) ausführt,
- der eine von dem ersten Knoten (200; 100) und dem zweiten Knoten (100; 200), der den Schritt des Übertragens (302) ausführt, führt den Schritt des Bestimmens (304) aus, welche der einen oder der mehreren RLC-Entitäten (522; 524; 526) aktiviert oder deaktiviert werden soll.

13. Verfahren (400) zur Unterstützung beim Übertragen eines Steuerelements, CE, zum selektiven Aktivieren und Deaktivieren einer oder mehrerer sekundärer Funkverbindungssteuerungsentitäten, RLC-Entitäten, die für Paketduplizierung bei einer Funkkommunikation zwischen einer Funkvorrichtung (504) und einem Funkzugangsnetzwerk, RAN, ausgelegt sind, wobei das RAN einen ersten Knoten (200; 100) und einen zweiten Knoten (100; 200) umfasst, wobei der erste Knoten (200; 100) eine primäre RLC-Entität (520) umfasst, die für die Paketduplizierung ausgelegt ist, und der zweite Knoten (100; 200) mindestens eine der einen oder der mehreren sekundären RLC-Entitäten (522; 524; 526) umfasst, wobei das Verfahren **gekennzeichnet ist durch**:
Senden (402) von Unterstützungsinformationen an einen von dem ersten Knoten (200; 100) und dem zweiten Knoten (100; 200), der das CE an die Funkvorrichtung (504) überträgt, wobei das CE einen Aktivitätszustand jeder der einen oder der mehreren sekundären RLC-Entitäten (522; 524; 526), die für die Paketduplizierung ausgelegt ist, in Abhängigkeit von den Unterstützungsinformationen angibt.

14. Verfahren (400) nach Anspruch 13, wobei das Verfahren (400) vom ersten Knoten (200; 100) durchgeführt wird und/oder ferner die Schritte nach einem der Ansprüche 2 bis 12 oder diesen entsprechende Schritte umfasst.

15. Computerprogrammprodukt, umfassend Programmcodeabschnitte zum Ausführen der Schritte nach einem der Ansprüche 1 bis 12 oder 13 bis 14, wenn das Computerprogrammprodukt auf einer oder mehreren Computervorrichtungen (1104; 1204) ausgeführt wird, und gegebenenfalls gespeichert auf einem computerlesbaren Aufzeichnungsmedium (1106; 1206).

16. Steuernder Knoten (100) zum Übertragen eines Steuerelements, CE, zum selektiven Aktivieren und Deaktivieren einer oder mehrerer sekundärer Funkverbindungssteuerungsentitäten, RLC-Entitäten, die für Paketduplizierung bei einer Funkkommunikation zwischen einer Funkvorrichtung (504) und einem Funkzugangsnetzwerk, RAN, ausgelegt sind, wobei das RAN einen ersten Knoten (200; 100) und einen zweiten Knoten (100; 200) umfasst, wobei der erste Knoten (200; 100) eine primäre RLC-Entität (520) umfasst, die für die Paketduplizierung ausgelegt ist, und der zweite Knoten (100; 200) mindestens eine der einen oder der mehreren sekundären RLC-Entitäten (522; 524; 526) umfasst, **dadurch gekennzeichnet, dass** er zu Folgendem ausgelegt ist:
Austauschen einer Steuernachricht (800) zwischen dem ersten Knoten (200; 100) und dem zweiten Knoten (100; 200), wobei die Steuernachricht (800) angibt, welcher von dem ersten Knoten (200; 100) und dem zweiten Knoten (100; 200) den Schritt des Übertragens (302) des CE (700) an die Funkvorrichtung (504) ausführen soll; und
Übertragen des CE vom RAN an die Funkvorrichtung (504), wobei das CE einen Aktivitätszustand jeder der einen oder der mehreren sekundären RLC-Entitäten (522; 524; 526) angibt, die für die Paketduplizierung ausgelegt ist.

17. Nicht steuernder Knoten (200) zum Unterstützen beim Übertragen eines Steuerelements, CE, zum selektiven Aktivieren und Deaktivieren einer oder mehrerer sekundärer Funkverbindungssteuerungsentitäten, RLC-Entitäten, die für Paketduplizierung bei einer Funkkommunikation zwischen einer Funkvorrichtung (504) und einem Funkzugangsnetzwerk, RAN, ausgelegt sind, wobei das RAN einen ersten Knoten (200; 100) und einen zweiten Knoten (100; 200) umfasst, wobei der erste Knoten (200; 100) eine primäre RLC-Entität (520) umfasst, die für die Paketduplizierung ausgelegt ist, und der zweite Knoten (100; 200) mindestens eine der einen oder der mehreren sekundären RLC-Entitäten (522; 524; 526) umfasst, **dadurch gekennzeichnet, dass** er ausgelegt ist zum:
Senden von Unterstützungsinformationen an einen von dem ersten Knoten (200; 100) und dem zweiten Knoten (100; 200), der das CE an die Funkvorrichtung (504) überträgt, wobei das CE einen Aktivitätszustand jeder der einen oder der mehreren sekundären RLC-Entitäten (522; 524; 526), die für die Paketduplizierung ausgelegt ist, in Abhängigkeit von den Unterstützungsinformationen angibt.

## Revendications

1. Procédé (300) de transmission d'un élément de commande, CE (700), pour sélectivement activer et désactiver une ou plusieurs entités de commande de liaison radio, RLC, secondaires (522 ; 524 ; 526) configurées pour une duplication de paquets dans une communication radio entre un dispositif radio (504) et un réseau d'accès radio, RAN, le RAN comprenant un premier noeud (200 ; 100) et un deuxième noeud (100 ; 200), dans lequel le premier noeud (200 ; 100) comprend une entité RLC primaire (520) configurée pour la duplication de paquets et le deuxième noeud (100 ; 200) comprend au moins l'une parmi les une ou plusieurs entités RLC secondaires (522 ; 524 ; 526), le procédé (300) étant **caractérisé par** :
l'échange d'un message de commande (800) entre le premier noeud (200 ; 100) et le deuxième noeud (100 ; 200), le message de commande (800) étant indicatif de celui parmi le premier noeud (200 ; 100) et le deuxième noeud (100 ; 200) qui doit réaliser l'étape de transmission (302) de la CE (700) au dispositif radio (504) ; et
la transmission (302) de la CE (700) du RAN au dispositif radio (504), dans lequel la CE (700) est indicative d'un état d'activité de chacune des une ou plusieurs entités RLC secondaires (522 ; 524 ; 526) configurées pour la duplication de paquets.

2. Procédé (300) selon la revendication 1, dans lequel le procédé (300) est réalisé par le deuxième noeud (100 ; 200), et/ou
dans lequel la CE (700) est transmise depuis l'un parmi le premier noeud (200 ; 100) et le deuxième noeud (100 ; 200, et/ou
dans lequel la CE (700) est transmise depuis le deuxième noeud (100 ; 200) au dispositif radio (504).

3. Procédé (300) selon la revendication 1 ou 2, dans lequel l'échange du message de commande (800) comprend :
l'envoi du message de commande (800) du deuxième noeud (100 ; 200) au premier noeud (200 ; 100) ou la réception du message de commande (800) depuis le premier noeud (200 ; 100) au niveau du deuxième noeud (100 ; 200), dans lequel le message de commande (800) amène le deuxième noeud (100 ; 200) à transmettre (302) la CE (700) au dispositif radio (504), ou
l'envoi du message de commande (800) du deuxième noeud (100 ; 200) au premier noeud (200 ; 100) ou la réception du message de commande (800) du premier noeud (200 ; 100) au deuxième noeud (100 ; 200), dans lequel le message de commande (800) empêche le premier noeud (200 ; 100) de transmettre la CE (700) au dispositif radio (504) .

4. Procédé (300) selon la revendication 3, dans lequel chacun parmi le premier noeud (200 ; 100) et le deuxième nous (100 ; 200) comprend une unité centrale, CU, et une unité distribuée, DU,
facultativement dans lequel la DU du premier noeud (200 ; 100) comprend l'entité RLC primaire (520) et/ou la DU du deuxième noeud (100 ; 200) comprend l'au moins une parmi les une ou plusieurs entités RLC secondaires (522 ; 524 ; 526).

5. Procédé (300) selon la revendication 4, dans lequel la CU du premier noeud (200 ; 100) comprend une entité de protocole de convergence de données en paquets, PDCP, l'entité PDCP étant un point d'agrégation de la duplication de paquets, et/ou
dans lequel le message de commande (800) est envoyé depuis la CU du deuxième noeud (100 ; 200) à la CU du premier noeud (200 ; 100) ou reçu depuis la CU du premier noeud (200 ; 100) au niveau de la CU du deuxième noeud (100 ; 200), facultativement dans lequel le message de commande (800) est acheminé de la CU du deuxième noeud (100 ; 200) à la DU du deuxième noeud (100 ; 200), en outre facultativement dans lequel la DU du deuxième noeud (100 ; 200), facultativement une couche de commande d'accès au support, MAC, du deuxième noeud (100 ; 200), transmet (302) la CE (700) au dispositif radio (504) en réponse au message de commande (800).

6. Procédé (300) selon l'une quelconque des revendications 1 à 5, dans lequel le message de commande (800) est indicatif de l'un des cas suivants :
une commande exclusive du noeud recevant le message de commande en ce qui concerne la détermination (304) de l'état d'activité des entités RLC secondaires (522 ; 524 ; 526) et/ou la transmission (302) de la CE ;
pas de commande du noeud recevant le message de commande en ce qui concerne la détermination (304) de l'état d'activité des entités RLC secondaires (522 ; 524 ; 526) et/ou la transmission (302) de la CE ;
une commande directe du noeud recevant le message de commande en ce qui concerne la détermination (304) de l'état d'activité des entités RLC secondaires (522 ; 524 ; 526) sur la base des informations d'assistance reçues et/ou une commande exclusive en ce qui concerne la transmission (302) de la CE ; et
une commande indirecte du noeud recevant le message de commande en ce qui concerne la détermination (304) de l'état d'activité des entités RLC secondaires (522 ; 524 ; 526) sur la base d'informations d'assistance envoyées et/ou pas de commande en ce qui concerne la transmission (302) de la CE.

7. Procédé (300) selon l'une quelconque des revendications 1 à 6, dans lequel l'état d'activité indiqué par la CE pour chacune parmi les une ou plusieurs entités RLC secondaires (522 ; 524 ; 526) comprend l'activation ou la désactivation de l'une respective parmi les une ou plusieurs entités RLC secondaires (522 ; 524 ; 526), et/ou
dans lequel le procédé (300) comprend en outre ou initie la détermination (304) de celle parmi les une ou plusieurs entités RLC secondaires (522 ; 524 ; 526) qui doit être activée ou désactivée, facultativement le procédé (300) comprend en outre ou initie la réception d'informations d'assistance depuis le premier noeud (200 ; 100) au niveau du deuxième noeud (100 ; 200), dans lequel la détermination (304) dépend des informations d'assistance.

8. Procédé (300) selon l'une quelconque des revendications 1 à 7, dans lequel la communication radio entre le dispositif radio (504) et le RAN comprend un support radio de données, DRB, et
dans lequel l'entité RLC primaire (520) et les une ou plusieurs entités RLC secondaires (522 ; 524 ; 526) sont configurées pour la duplication de paquets du DRB ou dans lequel le procédé (300) comprend en outre ou initie la transmission, au dispositif radio (504), d'un message de commande initial indicatif de l'activation de la duplication de paquets pour le DRB.

9. Procédé (300) selon l'une quelconque des revendications 1 à 8, dans lequel chacune des entités RLC est associée à une porteuse différente et/ou à une cellule différente et/ou à un canal logique différent et/ou à un trajet RLC différent, ou
dans lequel l'un parmi le premier noeud (200 ; 100) et le deuxième noeud (100 ; 200) est un noeud maître, MN, comprenant une couche de commande de ressources radio, RRC, et dans lequel l'autre parmi le premier noeud (200 ; 100) et le deuxième noeud (100 ; 200) est un noeud secondaire, SN, le procédé comprenant :
la transmission, au dispositif radio (504), ou la réception, depuis le dispositif radio (504) d'une signalisation RRC pour au moins l'un parmi un établissement, une configuration, une maintenance et une libération d'un support radio de données de la duplication de paquets.

10. Procédé (300) selon l'une quelconque des revendications 1 à 9, dans lequel le premier noeud (200 ; 100) comprend une entité de protocole de convergence de données en paquets, PDCP, et
dans lequel l'entité PDCP est un point d'agrégation de la duplication de paquets, ou dans lequel le procédé comprend en outre ou initie au moins l'une parmi :
la détermination d'un nombre des entités RLC secondaires (522 ; 524 ; 526) configurées pour la duplication de paquets ;
la transmission, au deuxième noeud (100 ; 200), d'un message de commande initial indicatif de l'activation de la duplication de paquets et/ou d'un nombre de l'au moins une entité RLC secondaire (522 ; 524 ; 526) au niveau du deuxième noeud (100 ; 200) et/ou d'un état initial de l'état d'activité pour chacune de l'au moins une entité RLC secondaire (522 ; 524 ; 526) ;
et
la réalisation de la duplication de paquets par l'entité PDCP.

11. Procédé (300) selon l'une quelconque des revendications 1 à 10, dans lequel la duplication de paquets est basée sur au moins l'une parmi une connectivité double, DC, et une agrégation de porteuse, CA, ou
dans lequel la CE est une CE de commande d'accès au support, MAC, ou
dans lequel la CE est indicative de l'état d'activité de chacune de 3 entités RLC secondaires (522 ; 524 ; 526) ou de jusqu'à 3 entités RLC secondaires (522 ; 524 ; 526).

12. Procédé (300) selon l'une quelconque des revendications 1 à 11, dans lequel le premier noeud (200 ; 100) comprend en outre au moins l'une parmi les une ou plusieurs entités RLC secondaires (522 ; 524 ; 526), et
dans lequel le message de commande est échangé entre le premier noeud (200 ; 100) et le deuxième noeud (100 ; 200), ou dans lequel le procédé comprend en outre ou initie la détermination de celui parmi le premier noeud (200 ; 100) et le deuxième menu (100 ; 200) qui doit réaliser l'étape de transmission (302) de la CE au dispositif radio (504), dans lequel la détermination est basée sur une condition, facultativement dans lequel au moins l'un des cas suivants s'applique :
- la condition exige que l'un parmi le premier noeud (200 ; 100) et le deuxième noeud (100 ; 200), qui comprend l'entité PDCP pour la duplication de paquets, réalise l'étape de transmission (302),
- la condition exige que l'un parmi le premier noeud (200 ; 100) et le deuxième noeud (100 ; 200), qui comprend plus d'entités PDCP configurées pour la duplication de paquets que l'autre, réalise l'étape de transmission (302),
- la duplication de paquets est basée sur un support divisé, et dans lequel la condition exige que le premier noeud (200 ; 100) comprenant l'entité RLC primaire (520) réalise l'étape de transmission (302),
- l'un parmi le premier noeud (200 ; 100) et le deuxième une (100 ; 200), qui réalise l'étape de transmission (302), réalise l'étape de détermination (304) de celle parmi les une ou plusieurs entités RLC secondaires (522 ; 524 ; 526) qui doit être activée ou désactivée.

13. Procédé (400) d'assistance à la transmission d'un élément de commande, CE, pour sélectivement activer et désactiver une ou plusieurs entités de commande de liaison radio, RLC, secondaires configurées pour une duplication de paquets dans une communication radio entre un dispositif radio (504) et un réseau d'accès radio, RAN, le RAN comprenant un premier noeud (200 ; 100) et un deuxième noeud (100 ; 200), dans lequel le premier noeud (200 ; 100) comprend une entité RLC primaire (520) configurée pour la duplication de paquets et le deuxième noeud (100 ; 200) comprend au moins l'une parmi les une ou plusieurs entités RLC secondaires (522 ; 524 ; 526), le procédé étant **caractérisé par** :
l'envoi (402) d'informations d'assistance à l'un parmi le premier noeud (200 ; 100) et le deuxième noeud (100 ; 200), qui transmet la CE au dispositif radio (504), dans lequel la CE est indicative d'un état d'activité de chacune des une ou plusieurs entités RLC secondaires (522 ; 524 ; 526) configurées pour la duplication de paquets en fonction des informations d'assistance.

14. Procédé (400) selon la revendication 13, dans lequel le procédé (400) est réalisé par le premier noeud (200 ; 100), et/ou comprend en outre les étapes selon l'une quelconque des revendications 2 à 12 ou n'importe quelle étape leur correspondant.

15. Produit programme informatique comprenant des parties de code de programme pour réaliser les étapes selon l'une quelconque des revendications 1 à 12 ou 13 à 14 lorsque le produit programme informatique est exécuté sur un ou plusieurs dispositifs informatiques (1104 ; 1204), facultativement stocké sur un support d'enregistrement lisible par ordinateur (1106 ; 1206).

16. Noeud de commande (100) pour la transmission d'un élément de commande, CE, pour sélectivement activer et désactiver une ou plusieurs entités de commande de liaison radio, RLC, secondaires configurées pour une duplication de paquets dans une communication radio entre un dispositif radio (504) et un réseau d'accès radio, RAN, le RAN comprenant un premier noeud (200 ; 100) et un deuxième noeud (100 ; 200), dans lequel le premier noeud (200 ; 100) comprend une entité RLC primaire (520) configurée pour la duplication de paquets et le deuxième noeud (100 ; 200) comprend au moins l'une parmi les une ou plusieurs entités RLC secondaires (522 ; 524 ; 526), **caractérisé en ce qu'**il est configuré pour :
échanger un message de commande (800) entre le premier noeud (200 ; 100) et le deuxième noeud (100 ; 200), le message de commande (800) étant indicatif de celui parmi le premier noeud (200 ; 100) et le deuxième noeud (100 ; 200) qui doit réaliser l'étape de transmission (302) de la CE (700) au dispositif radio (504) ; et
transmettre la CE du RAN au dispositif radio (504), dans lequel la CE est indicative d'un état d'activité de chacune des une ou plusieurs entités RLC secondaires (522 ; 524 ; 526) configurées pour la duplication de paquets.

17. Noeud de non-commande (200) pour l'assistance à la transmission d'un élément de commande, CE, pour sélectivement activer et désactiver une ou plusieurs entités de commande de liaison radio, RLC, secondaires configurées pour une duplication de paquets dans une communication radio entre un dispositif radio (504) et un réseau d'accès radio, RAN, le RAN comprenant un premier noeud (200 ; 100) et un deuxième noeud (100 ; 200), dans lequel le premier noeud (200 ; 100) comprend une entité RLC primaire (520) configurée pour la duplication de paquets et le deuxième noeud (100 ; 200) comprend au moins l'une parmi les une ou plusieurs entités RLC secondaires (522 ; 524 ; 526), **caractérisé en ce qu'**il est configuré pour :
envoyer des informations d'assistance à l'un parmi le premier noeud (200 ; 100) et le deuxième noeud (100 ; 200), qui transmet la CE au dispositif radio (504), dans lequel la CE est indicative d'un état d'activité de chacune des une ou plusieurs entités RLC secondaires (522 ; 524 ; 526) configurées pour la duplication de paquets en fonction des informations d'assistance.
